# EUROPEAN PATENT SPECIFICATION

(11) **EP 3 301 280 B1**
(45) Date of publication and mention of the grant of the patent: **04.03.2020**
(21) Application number: 17192000.2
(22) Date of filing: 20.09.2017
(51) Int. Cl.: F02D 41/02, F02D 41/04, F02D 41/10, F02D 29/06, H02P 9/00

(54) **STRADDLED VEHICLE**
GRÄTSCHSITZFAHRZEUG
VÉHICULE À ENFOURCHER

(30) Priority: 28.09.2016 JP 2016189636
(43) Date of publication of application: 04.04.2018
(73) Proprietor: Yamaha Hatsudoki Kabushiki Kaisha, Iwata-shi Shizuoka 438-8501 (JP)
(72) Inventor: OBA, Tatsuhiro, Iwata-shi, Shizuoka 438-8501 (JP); NISHIKAWA, Takahiro, Iwata-shi, Shizuoka 438-8501 (JP); HINO, Haruyoshi, Iwata-shi, Shizuoka 438-8501 (JP)
(74) Representative: Grünecker Patent- und Rechtsanwälte PartG mbB

(56) References cited:
- EP-A1- 3 064 748
- JP-A- 2013 092 097
- JP-A- 2013 253 557
- US-A1- 2003 029 653
- US-A1- 2009 050 119
- US-A1- 2013 297 185

## Description

The present teaching relates to a straddled vehicle and to method for controlling a straddled vehicle.

In a straddled vehicle as typified by a motorcycle, for example, improvement in acceleration performance which is basic performance is desired.

For example, JP 5874315 (Japanese Patent) shows a control device for controlling a starter generator provided in a motorcycle engine or the like. The control device of JP 5874315, upon a request for increasing a torque for driving a vehicle, uses the starter generator to perform an acceleration assist process. The control device of JP 5874315 performs the acceleration assist process if, for example, the logical AND of a plurality of conditions is TRUE, the plurality of conditions including a condition that a state where the degree of opening of a throttle valve is equal to or greater than a threshold continues for a prescribed time period or longer.

The control device of the straddled vehicle shown in JP 5874315 aims to improve acceleration performance by adding a torque of the starter generator in response to the request for increasing the torque for driving the vehicle.

Prior art document EP 3 064 748 A1 discloses a straddled vehicle with a drive wheel driven by an engine. Said engine includes a piston and a crankshaft. An acceleration command part is configured to instruct that the straddled vehicle be accelerated in accordance with an operation thereon. A generator is connected to the crankshaft. A battery and an inverter are provided. The inverter includes a plurality of switching parts configured to control a current flowing between the battery and the generator. If acceleration of the vehicle is requested while the generator is generating power, a control device switches the state of the generator from power generation to acceleration (motoring), to accelerate forward rotation of the crankshaft. For example, when acceleration of the vehicle is requested, acceleration of rotation of the crankshaft, which is energized by the combustion operation of the engine, is assisted by the generator. This gives an increased acceleration to the rotation of the crankshaft, as compared with when no power is supplied from the battery to the generator. Thus, an increased acceleration is given to the rotation of the crankshaft, as compared with rotation energized only by the combustion operation of the engine. The control device performs the vector control on the plurality of switching parts of the inverter, such that power is supplied from the battery to the generator, to accelerate the rotation of the crankshaft.

Prior art document JP 2013-92097 A discloses a straddled vehicle with a drive wheel driven by an engine. Said engine includes a piston and a crankshaft. A throttle valve is arranged in an intake passage and configured to be opened to a degree that is based on the amount of operation on an acceleration command part. The acceleration command part is configured to instruct that the straddled vehicle be accelerated in accordance with an operation thereon. A generator is connected to the crankshaft. During an acceleration assist processing the generator is used as an electric motor in order to quickly respond to the demand for increasing the torque for driving the vehicle by the user. In a first step, it is determined whether the logical product of the following conditions is true or not. The state where the variation amount of the rotation speed of the engine is not more than the specified amount has continued for the specified first time period or longer. The state that the opening degree of the throttle valve is equal to or larger than the threshold opening has continued for the specified second time period or longer. A state in which the changing speed of the opening degree of the throttle valve is not less than the threshold speed has continued for the specified third time period or longer. The state in which the rotational speed of the engine being within a specific range has continued for the predetermined time period or longer.

Prior art document US 2013/0297185 A1 discloses an apparatus for controlling fuel consumption in an internal combustion engine of a vehicle having a driver-actuated accelerator pedal includes an economy mode activation module and a standard fueling module. The economy mode activation module is configured to compare throttle input data with defined limits. The throttle input data is controllable by a driver of the vehicle via positioning of the accelerator pedal. The economy mode activation module is configured to control the fuel consumption of the internal combustion engine via an economy fuel map if the throttle input data falls within the defined limits for a defined amount of time. The standard fueling mode activation module is configured to control the fuel consumption of the internal combustion engine via a standard fuel map if the throttle input data does not fall within the defined limits for the defined amount of time. The teaching of said prior art document is focused on fuel consumption of the engine and uses an economy fuel map if the throttle input data falls within the defined limits for a defined amount of time. In particular, the method teaches to determine whether throttle input data satisfies the condition for economy control. Only when the condition for economy control is not satisfied, the method determines the condition for the standard mode to reduce performance losses.

An object of the present teaching is to provide a straddled vehicle and a method for controlling a straddled vehicle with its acceleration performance improved by exerting engine performance.

According to the present invention said object is solved by a straddled vehicle having the features of independent claim 1. Moreover, said object is solved by method for controlling a straddled vehicle having the features of independent claim 6. Preferred embodiments are laid down in the dependent claims.

It has been conducted studies on acceleration performance of a straddled vehicle. It has been conducted studies particularly on improving acceleration performance by increasing engine performance.

One of conceivable means for increasing engine performance in view of acceleration performance of a straddled vehicle is to reduce the inertia of a movable mechanism included in the engine, and more specifically to reduce the inertia of rotation of a crankshaft. The inertia of rotation of the crankshaft includes not only the turning moment of the crankshaft itself but also the inertia of a piston, a connecting rod, a flywheel, and the like, which move in conjunction with the crankshaft. For example, reducing the weight of the piston leads to reducing the inertia of rotation of the crankshaft. For example, reducing the moment of inertia of the flywheel leads to reducing the inertia of rotation of the crankshaft.

Reduction in the inertia of rotation of the crankshaft makes it easy that the rotation speed of the crankshaft is increased by a force generated by combustion. As a result, when, for example, acceleration of the straddled vehicle is requested by a rider's operation, the rotation of the crankshaft can be steeply accelerated following the operation. Thus, the acceleration performance is improved.

It, however, has been found that seeking to reduce the inertia of rotation of the crankshaft may rather deteriorate the acceleration performance in some cases. It has been studied occurrence of deterioration in the acceleration performance in a case where, for example, a mixed gas containing air and a fuel is supplied to a combustion chamber. This has resulted in a discovery that the performance of accelerating rotation of the crankshaft of the engine deteriorates when, for example, a state where a relatively small amount of mixed gas is supplied to the combustion chamber in an intake stroke continues before an acceleration operation and then the amount of mixed gas supply is rapidly increased by the acceleration operation. It has been conducted further studies on causes for the deterioration in the performance of accelerating rotation of the crankshaft.

When the amount of mixed gas supplied to the combustion chamber in the intake stroke before the acceleration operation is relatively small, a force generated by combustion is weak. This leads to a low rotation speed of the crankshaft. As a result, the crankshaft has a low rotational energy. The rotational energy of the crankshaft is further lowered when, for example, the inertia of rotation of the crankshaft is low. The crankshaft and the piston move in conjunction with each other. A low rotational energy of the crankshaft means a low kinetic energy of the piston, and in more detail, means that a low kinetic energy is available for operating the piston.

If the amount of mixed gas supplied to the combustion chamber in the intake stroke is rapidly increased by the acceleration operation, the piston compresses the increased amount of mixed gas with the low kinetic energy and therefore the rotation speed is likely to drop. When, for example, the inertia of the crankshaft is low, a significant drop in the rotation speed occurs at a time of compression. Particularly in a single-cylinder engine, a combustion stroke less frequently comes in every rotation of the crankshaft. This makes it likely that the rotation speed of the crankshaft largely varies. As a result, a significant drop in the rotation speed occurs due to a compression reaction force generated by the increased amount of mixed gas. The drop in the rotation speed tends to retard an entire combustion operation of the single-cylinder engine. It therefore takes time for the rotation speed of the crankshaft to rise thereafter. That is, the performance of accelerating rotation of the crankshaft deteriorates. The acceleration performance of the straddled vehicle deteriorates accordingly.

It has been conceived of promptly assisting the piston operation with a motor at a time when the amount of mixed gas supplied in the intake stroke increases. Promptly assisting the piston operation at a time when the amount of mixed gas increases helps the piston compress the increased amount of mixed gas.

If assistance to the piston operation via rotation of the crankshaft is started before the piston compresses the mixed gas, not limited to a time period during which the piston compresses the mixed gas; a high operation speed of the piston is ensured at a time point when the compression of the mixed gas is started. A high operation speed of the piston and a high rotation speed of the crankshaft enable the piston to compress the mixed gas with a high kinetic energy even when, for example, the inertia is low.

In particular, a single-cylinder engine has a high-load region in which a high load is put on the piston operation for compressing the mixed gas, and a low-load region in which a load put thereon is lower than that of the high-load region. From the viewpoint of the rotation angle of the crankshaft, the low-load region of the single-cylinder engine is wider than the high-load region thereof. Therefore, a time period in which the piston operation is assisted is not limited to the time period during which the mixed gas is compressed, but can easily be ensured before the time period during which the mixed gas is compressed. This helps the kinetic energy be increased at a time point when the piston compresses the mixed gas.

It has been discovered that how promptly the piston operation is assisted after an increase in the amount of mixed gas is important in improving the acceleration performance. It has been conducted further studies, to reach an idea that starting to assist the piston operation promptly after an increase in the amount of mixed gas is enabled by making the motor's assist operation triggered by the logical OR of a plurality of conditions regarding an increase in the amount of mixed gas. For example, it is conceivable to adopt, as a trigger of the assist operation, the logical OR of a condition regarding the amount of operation on an acceleration command part that instructs to what degree a throttle valve is to be opened and a condition regarding the change rate of the amount of operation on the acceleration command part. In such a case, for example, even though the condition regarding the amount of operation on the acceleration command part is not yet satisfied, the assistance to the piston operation can be started immediately after the condition regarding the change rate is satisfied. This enables the piston to compress the increased amount of mixed gas with a high kinetic energy.

Enabling the piston to complete the compression of the increased amount of mixed gas without any delay results in generation of increased power in subsequent combustion of the increased amount of mixed gas. As a consequence, a kinetic energy subsequently available for the piston is increased. This causes a chain reaction of increasing power generated by combustion of an increased amount of mixed gas and enabling the piston having the increased power to compress the increased amount of mixed gas. In this manner, power outputted from the single-cylinder engine is rapidly increased by a combustion function that is inherent in the single-cylinder engine.

On the other hand, for example, the control device of the straddled vehicle shown in JP 5874315 performs the acceleration assist process if the logical AND of the plurality of conditions, which include the condition that the state where the degree of opening of the throttle valve is equal to or greater than the threshold continues for the prescribed time period or longer, is TRUE. In this configuration, the acceleration assist with the starter generator is started with a delay relative to an increase in the amount of mixed gas. The control device of JP 5874315, therefore, is not able to assist the piston operation promptly after the amount of mixed gas is increased.

The present invention assists the piston operation as promptly as possible after the amount of mixed gas is increased, thus promptly exerting the combustion function that is inherent in the engine. As a result, the acceleration performance is improved by the performance of the engine which is able to output higher power than the motor is.

The present invention is an invention accomplished based on the findings described above.

To solve the problems described above, the present invention adopts the following configuration: A straddled vehicle including:
a single-cylinder engine including a piston and a crankshaft, the piston provided in a cylinder and moved to and fro by combustion of a mixed gas containing air and a fuel, the crankshaft configured to be rotated along with the to-and-fro movement of the piston;
a drive wheel configured to receive a rotational force outputted from the single-cylinder engine via the crankshaft and drive the straddled vehicle;
an acceleration command part that instructs that the straddled vehicle be accelerated in accordance with an operation thereon;
a throttle valve arranged in an intake passage connecting with the single-cylinder engine, and configured to be opened to a degree that is based on the amount of operation on the acceleration command part so that an amount of the air is supplied to the single-cylinder engine, the amount corresponding to the degree of opening;
a permanent magnet type motor including a rotor and a permanent magnet, the rotor connected directly or indirectly to the crankshaft so as to be rotatable in response to rotation of the crankshaft, the permanent magnet provided to the rotor;
a battery;
an inverter including a plurality of switching parts by which a current flowing between the battery and the permanent magnet type motor is controlled; and
a control device that controls the plurality of switching parts so as to assist a piston operation by directing the permanent magnet type motor to apply a force to the piston via the crankshaft such that the force cooperates with a force generated by combustion in the single-cylinder engine to move the piston to and fro, the control triggered by the amount of operation on the acceleration command part being increased so as to satisfy at least one of a condition regarding the amount of operation on the acceleration command part and a condition regarding the rate of increase in the amount of operation on the acceleration command part under a state where the throttle valve is not in a full-open state and the piston is moved to and fro by combustion of the mixed gas.

In the straddled vehicle of the present invention, upon the acceleration command part being operated in accordance with a rider's operation, the throttle valve is opened to a degree that is based on the amount of operation on the acceleration command part. The throttle valve allows an amount of air to be supplied to the single-cylinder engine through the intake passage, the amount corresponding to the degree of opening of the throttle valve. In the single-cylinder engine, the piston provided in the cylinder is moved to and fro by combustion of the mixed gas. The crankshaft coupled to the piston is rotated. The drive wheel receives the rotational force of the crankshaft, to drive the straddled vehicle. The straddled vehicle runs accordingly. The straddled vehicle is accelerated based on an operation on the acceleration command part. For example, when sharp acceleration of the straddled vehicle is required, the acceleration command part is operated quickly.

The rotor of the permanent magnet type motor is connected to the crankshaft. The rotor is provided with the permanent magnet. The plurality of switching parts arranged between the permanent magnet type motor and the battery control the current flowing between the battery and the permanent magnet type motor. The switching parts are controlled by the control device. The control device is able to control a force to be supplied from the permanent magnet type motor to the piston via the crankshaft.

When sharp acceleration of the straddled vehicle is needed, the acceleration command part is operated quickly, so that the throttle valve is opened quickly, which Increases the amount of mixed gas to be supplied to the single-cylinder engine. Before the increase in the amount of supplied mixed gas, the amount of mixed gas is relatively small, and therefore the rotation speed of the crankshaft is low. That is, a kinetic energy available for the piston operation is low. The quick open of the throttle valve causes a rapid increase in the amount of air supplied to the single-cylinder engine in an intake stroke. The increase in the amount of compressed air acts in such a direction that the piston operation is more retarded.

The control device of the straddled vehicle of the present invention controls the plurality of switching parts, triggered by the amount of operation on the acceleration command part being increased so as to satisfy at least one of a condition regarding the amount of operation on the acceleration command part and a condition regarding the rate of increase in the amount of operation on the acceleration command part. The control device controls the switching parts so as to assist the piston operation. In the assistance to the piston operation, the permanent magnet type motor applies a force to the piston such that the force cooperates with a force generated by combustion in the single-cylinder engine to move the piston to and fro.

As a condition for starting to assist the piston operation, the control device adopts the logical OR of the condition regarding the amount of operation on the acceleration command part and the condition regarding the rate of increase in the amount of operation on the acceleration command part. This enables the permanent magnet type motor to promptly assist the piston operation. For example, even though the condition regarding the amount of operation on the acceleration command part is not yet satisfied, the permanent magnet type motor is able to start to assist the piston operation immediately after the condition regarding the rate of increase in the amount of operation on the acceleration command part is satisfied.

For example, the control device can regard a rapid increase in the amount of operation on the acceleration command part as a rapid increase in the amount of air supply, and promptly start to assist the piston operation. It may be acceptable that the assistance to the piston operation is started before the piston compresses the increased amount of air. In the single-cylinder engine, a low-load region is wider than a high-load region in which a load on operations of the piston and the crankshaft increases along with air compression. In the single-cylinder engine, the assistance to the piston operation is more likely to be started in the low-load region which is wider. In such a case, a force that the permanent magnet type motor applies before the piston compresses air is accumulated as energy for operating the piston. Upon immediate start of the assistance to the piston operation as triggered by a quick increase in the amount of operation on the acceleration command part, a strong force applied by the permanent magnet type motor cooperates with a force generated by combustion to enable the piston to compress the increased amount of air.

As described above, while the amount of mixed gas supplied to the single-cylinder engine is increasing, the permanent magnet type motor promptly assists the piston operation, thus suppressing a drop in the piston operation speed at a time of compressing an increased amount of mixed gas.

The increased amount of mixed gas is combusted after compression is performed by the piston having received application of the force from the permanent magnet type motor. This allows an increased force to be generated by the combustion. That is, the rotational force generated by a combustion function that is inherent in the engine is increased. Thus, the rotation of the crankshaft is accelerated by combustion power generated in the engine.

After the rotation of the crankshaft is accelerated by combustion power, the rotation speed of the crankshaft is stabilized even though an increased amount of mixed gas is supplied.

In the straddled vehicle of the present invention, as thus far described, the assistance to the piston operation is promptly performed in response to an increase in the amount of air supplied to the single-cylinder engine, so that the combustion function of the single-cylinder engine is promptly exerted in response to an increase in the amount of air supply. In this manner, the combustion operation of the single-cylinder engine obtains improved performance of accelerating rotation of the crankshaft. Accordingly, the straddled vehicle has high acceleration performance.

Even when, for example, the single-cylinder engine is so designed as to reduce the inertia of rotation of the crankshaft, a drop in the rotation speed of the crankshaft which may be caused by an increase in the amount of air supply is suppressed. A reduced inertia of rotation of the crankshaft leads to a further increase in the performance of accelerating the rotation speed of the crankshaft. Accordingly, the straddled vehicle has high acceleration performance. This is how the straddled vehicle of the present invention improves acceleration performance by exerting engine performance better.

The present invention is applicable to an engine in which the inertia of rotation of a crankshaft is not reduced, for example. The present invention is also applicable to an engine in which the inertia of rotation of a crankshaft is reduced, for example.

In the configuration of the present invention the control device performs such a control that the permanent magnet type motor applies a force to the piston so as to move the piston to and fro, irrespective of how long a state of the increase in the amount of operation on the acceleration command part continues. Therefore, if at least one of a condition regarding the amount of operation on the acceleration command part and a condition regarding the rate of increase in the amount of operation on the acceleration command part is satisfied, the permanent magnet type motor applies a force to the piston so as to move the piston to and fro without waiting until the state where the amount of operation on the acceleration command part is increased continues. This means that the permanent magnet type motor promptly assists the piston operation in response to an increase in the amount of air supplied to the single-cylinder engine. The acceleration performance is improved by better exertion of the engine performance.

The straddled vehicle of the present invention may include a throttle position sensor that detects the degree of opening of the throttle valve, in which the control device makes determination about the rate of increase in the amount of operation on the acceleration command part and the amount of operation on the acceleration command part based on a result of detection performed by the throttle position sensor, and controls the plurality of switching parts so as to assist the piston operation, the control triggered by the amount of operation on the acceleration command part being increased so as to satisfy at least one of a condition regarding the amount of operation on the acceleration command part and a condition regarding the rate of increase in the amount of operation on the acceleration command part.

In this configuration, determination about a condition regarding the rate of increase in the amount of operation on the acceleration command part and a condition regarding the amount of operation on the acceleration command part is made based directly on the degree of opening of the throttle valve. This enables the state of the throttle valve to be precisely reflected by the control of assisting the piston operation. Accordingly, the piston operation can be assisted more promptly in response to an increase in the amount of air. The acceleration performance is further improved by better exertion of the engine performance.

The straddled vehicle of the present invention may further include a clutch that switches between states of allowing and blocking transmission of a rotational force from the crankshaft to the drive wheel in accordance with the rotation speed of the crankshaft, in which
in at least part of a time period during which the clutch blocks transmission of the rotational force, the control device controls the switching parts so as to assist the piston operation, triggered by the amount of operation on the acceleration command part being increased so as to satisfy at least one of a condition regarding the amount of operation on the acceleration command part and a condition regarding the rate of increase in the amount of operation on the acceleration command part.

In the state where the clutch allows transmission of the rotational force, for example, the inertia of the drive wheel is reflected by the inertia of rotation of the crankshaft. While the clutch blocks transmission of the rotational force, on the other hand, the inertia of rotation of the crankshaft is relatively low. In this state, the piston has a low energy for compressing air. In this configuration, the permanent magnet type motor assists the piston operation, triggered by the amount of operation on the acceleration command part being increased so as to satisfy at least one of a condition regarding the amount of operation on the acceleration command part and a condition regarding the rate of increase in the amount of operation on the acceleration command part. This improves the rotation acceleration performance using the rotational force generated by engine combustion when the clutch is in the blocking state so that the inertia of rotation of the crankshaft is low.

The straddled vehicle of the present invention, in which in a case where the rotation speed of the crankshaft is equal to or less than an idling rotation speed of the single-cylinder engine, the control device may further control the plurality of switching parts so as to assist the piston operation, triggered by the amount of operation on the acceleration command part being increased so as to satisfy at least one of a condition regarding the amount of operation on the acceleration command part and a condition regarding the rate of increase in the amount of operation on the acceleration command part.

When the rotation speed of the crankshaft is equal to or less than the idling rotation speed of the single-cylinder engine, a smaller amount of air is supplied to the single-cylinder engine as compared with, for example, when the rotation speed of the crankshaft is equal to or more than the idling rotation speed. As a consequence, a weaker force is applied to the piston by combustion in the single-cylinder engine. That is, the piston has a low energy for
compressing the mixed gas. In this configuration, in an idling state where the piston has a low energy, the permanent magnet type motor assists the piston operation, triggered by the acceleration command part being displaced so as to satisfy at least one of a condition regarding the amount of operation on the acceleration command part and a condition regarding the rate of increase in the amount of operation on the acceleration command part. This improves the rotation acceleration performance using the rotational force generated by engine combustion when the clutch is in the blocking state, even though the piston has a low energy.

The straddled vehicle of the present invention, in which
the throttle valve may further bets a mechanical throttle valve mechanically coupled to the acceleration command part with a cable, and
the control device controls the plurality of switching parts so as to assist the piston operation, triggered by the amount of operation on the acceleration command part, which is mechanically coupled to the mechanical throttle valve, being increased so as to satisfy at least one of a condition regarding the amount of operation on the acceleration command part and a condition regarding the rate of increase in the amount of operation on the acceleration command part.

Unlike an electronic-controlled throttle for example, a mechanical throttle valve mechanically coupled to the acceleration command part with a cable has the degree of its opening directly reflecting an operation on the acceleration command part. For example, when a rider suddenly operates the acceleration command part, the mechanical throttle valve is opened at a high speed. In such a situation as well, this configuration allows the permanent magnet type motor to promptly assist the piston operation. Accordingly, the performance of accelerating the rotation speed of the crankshaft can be improved, also in a straddled vehicle including a mechanical throttle valve.

The straddled vehicle of the present invention includes a drive wheel. Examples of the straddled vehicle of the present invention include motorcycles, motor tricycles, and ATVs (All-Terrain Vehicles).

The engine of the present invention includes a piston and a crankshaft. Examples of the crankshaft of the present invention include a crankshaft coupled to the piston with the connecting rod, and a crankshaft coupled to the piston with another member in addition to the connecting rod. The crankshaft is configured such that, for example, to-and-fro movement of the piston is converted into rotational motion which is then transmitted to the crankshaft.

The engine of the present invention includes, a cylinder, a piston, and a connecting rod, the piston arranged in the cylinder such that the piston is freely movable to and fro, the connecting rod coupled to the piston and the
crankshaft. Examples of the engine of the present invention include a four-stroke engine and a two-stroke engine.

Examples of the throttle valve of the present invention include a mechanical throttle valve and an electronic-controlled throttle valve. The mechanical throttle valve is connected to the acceleration command part with a wire that mechanically transmits displacement of the acceleration command part. The electronic-controlled throttle valve is connected to an actuator that is operated in accordance with an electrical signal indicating displacement of the acceleration command part. In a straddled vehicle including the electronic-controlled throttle valve, such a control is possible that, for example, the throttle valve is operated slowly relative to the speed in which the acceleration command part
is operated. In the configuration of the present invention, however, a drop in the rotation speed of the crankshaft is suppressed, even after the amount of mixed gas is increased. This enables the throttle valve to be operated quickly. As a result, further improvement in the acceleration performance is achieved.

The engine of the present invention moves the piston to and fro by combusting a mixed gas containing air and a fuel. The engine of the present invention includes engines of direct injection type and engines of intake manifold injection type.

The permanent magnet type motor of the present invention is a motor including a permanent magnet. The permanent magnet type motor of the present invention includes a stator and a rotor. The rotor of the permanent magnet type motor of the present invention includes a permanent magnet. The rotor of the permanent magnet type motor of the present invention includes no winding. The stator of the permanent magnet type motor of the present invention includes windings. The permanent magnet type motor of the present invention includes windings corresponding to a plurality of phases. The permanent magnet type motor of the present invention may include windings corresponding to two phases, four phases, or more, for example. The permanent magnet type motor of the present invention, however, is able to easily perform a vector control and a phase control when provided with windings corresponding to three phases, for example. The windings of the stator are wound on a stator core. The rotor is rotated with the permanent magnet facing the stator core with an air gap there-between. The permanent magnet type motor of the present invention includes a motor of radial gap type and a motor of axial gap type. The motor of radial gap type, which is the permanent magnet type motor of the present invention, includes a motor of outer rotor type and a motor of inner rotor type, the motor of outer rotor type provided with a rotor that rotates outside a stator, the motor of inner rotor type provided with a rotor that rotates inside a stator. The permanent magnet type motor of the present invention may generate power, for example. The permanent magnet type motor of the present invention includes a permanent magnet type motor having a function as a generator and a permanent magnet type motor not having a function as a generator.

In the present invention, the rotor of the permanent magnet type motor includes a rotor connected directly to the crankshaft, a rotor connected indirectly to the crankshaft with interposition of a transmission mechanism, and the like. Examples of the transmission mechanism include belts, chains, gears, speed reducers, speed increasers, and the like. The rotor of the present invention is preferably connected to the crankshaft with its speed ratio fixed relative to the crankshaft.

The inverter of the present invention includes the plurality of switching parts by which a current outputted from the battery to the permanent magnet type motor is controlled. The switching parts are transistors, for example. The switching parts include FETs (Field Effect Transistors), thyristors, and IGBTs (Insulated Gate Bipolar Transistors), for example. The inverter includes a bridge inverter composed of a plurality of switching parts, for example.

The control device of the present invention includes a control device configured to control operations of the engine, for example. The control device of the present invention, however, also includes a control device different from a device configured to control operations of the engine, for example.

The acceleration command part of the present invention is means for instructing that the straddled vehicle be accelerated. In other words, the acceleration command part of the present invention is means for indicating the amount of increase in an engine torque. In other words, the acceleration command part of the present invention is means for instructing that the degree of opening of the throttle valve be increased. The acceleration command part of the present invention is, for example, operated by a rider. The acceleration command part of the present invention is, for example, an accelerator grip. In this case, the rotational position of the accelerator grip represents the amount of operation on the acceleration command part. The acceleration command part includes, for example, a pedal, a lever, and a switch.

The acceleration command part also includes, for example, a device that is not displaceable by an operation. Examples of such an acceleration command part include an acceleration command part configured such that a force applied to the acceleration command part represents the amount of operation on the acceleration command part. The acceleration command part may be configured to instruct not only that the straddled vehicle be accelerated but also that the straddled vehicle be decelerated. In such a case, the amount of operation on the acceleration command part performed to accelerate the straddled vehicle corresponds to "the amount of operation on the acceleration command part".

The acceleration command part is configured such that the greater the amount of operation on the acceleration command part is, the greater the amount of increase in the speed of the straddled vehicle instructed by the acceleration command part is. In other words, the acceleration command part is configured such that the greater the amount of operation on the acceleration command part is, the higher an engine torque instructed by the acceleration command part is. In other words, the acceleration command part is configured such that the greater the amount of operation on the acceleration command part is, the greater the amount of increase in the degree of opening of the throttle valve instructed by the acceleration command part is. The acceleration command part is configured such that the higher the rate of increase in the amount of operation on the acceleration command part is, the larger the degree of acceleration of the straddled vehicle (the speed at which the degree of opening of the throttle valve increases) instructed by the acceleration command part is.

The control device of the present invention may, for example, use a result of detection performed by a throttle position sensor that is connected to the throttle valve, for the determination about the rate of increase in the amount of operation on the acceleration command part and the amount of operation on the acceleration command part.

The control device may, for example, use a result of detection performed by a sensor that is connected to the acceleration command part, for the determination about the rate of increase in the amount of operation on the acceleration command part and the amount of operation on the acceleration command part. In a configuration including an electronic-controlled throttle valve, for example, a delay of operation of the throttle valve may occur relative to displacement of the acceleration command part. In such a case, a piston assistance operation is started based on a result of detection performed by the sensor that is connected to the acceleration command part, thus enabling more prompt start of the piston assistance operation.

In the present invention, the condition regarding the amount of operation on the acceleration command part may be, for example, that the amount of operation on the acceleration command part exceed a certain fixed operation amount limit. The condition regarding the amount of operation may be, for example, that the amount of operation on the acceleration command part exceed a prescribed amount relative to the amount of operation performed a specified time before. The condition regarding the rate of increase in the amount of operation on the acceleration command part may be, for example, whether or not the rate of increase in the amount of operation on the acceleration command part is equal to or higher than a fixed speed limit. The condition regarding the rate may be, for example, that the rate of increase in the amount of operation on the acceleration command part be equal to or higher than a speed limit specified in accordance with the amount of operation on the acceleration command part. In the present invention, an increase in the amount of operation on the acceleration command part causes an increase in the degree of opening of the throttle valve.

Configuring the control device of the present invention to perform the piston assistance operation triggered by the acceleration command part being displaced so as to satisfy at least one of a condition regarding the amount of operation on the acceleration command part and a condition regarding the rate of increase in the amount of operation on the acceleration command part, means performing the piston assistance operation upon fulfilment of either one of the conditions, without waiting for fulfilment of the other of the conditions.

While the permanent magnet type motor assists the piston operation, the single-cylinder engine is in combustion operation. Application of a force to the piston for causing to-and-fro movement thereof by the permanent magnet type motor is, for example, application of a force to the piston for causing to-and-fro movement thereof by the permanent magnet type motor driving the crankshaft.

The control device of the present invention may be configured to, for example, control the switching parts so as to assist the piston operation in at least part of a time period during which the clutch blocks transmission of the rotational force. The control device may be configured to, for example, control the switching parts so as to assist the piston operation in a time period during which the clutch allows transmission of the rotational force.

The control device of the present invention may be configured to, triggered by the amount of operation on the acceleration command part being increased so as to satisfy the one condition, control the plurality of switching parts so as to assist the piston operation, in a case where the rotation speed of the crankshaft is more than the idling rotation speed of the single-cylinder engine.

### [EFFECTS OF THE INVENTION]

The present invention is able to improve acceleration performance by exerting engine performance.

### [BRIEF DESCRIPTION OF THE DRAWINGS]

[FIG. 1] FIG. 1 shows an external appearance of a straddled vehicle according to an embodiment of the present invention.
[FIG. 2] FIG. 2 is a partial cross-sectional view schematically showing an outline configuration of an engine unit shown in FIG. 1.
[FIG. 3] FIG. 3 is an illustrative diagram schematically showing the relationship between a crank angle position and a required torque of a single-cylinder engine.
[FIG. 4] FIG. 4 is a cross-sectional view of a permanent magnet type motor shown in FIG. 2, as sectioned perpendicular to its rotation axis line.
[FIG. 5] FIG. 5 is a block diagram outlining an electrical configuration of the straddled vehicle shown in FIG. 1.
[FIG. 6] FIG. 6 is a flowchart illustrating operations of the straddled vehicle.
[FIG. 7] FIG. 7 is a timing chart showing an operation on an acceleration command part and a change in the crank rotation speed.
[FIG. 8] FIG. 8 is a timing chart showing an operation on the acceleration command part and a change in the crank rotation speed under an operation condition different from that of FIG. 7.

### [PREFERRED EMBODIMENTS]

Hereunder, the present invention is described based on preferred embodiments with reference to the drawings.

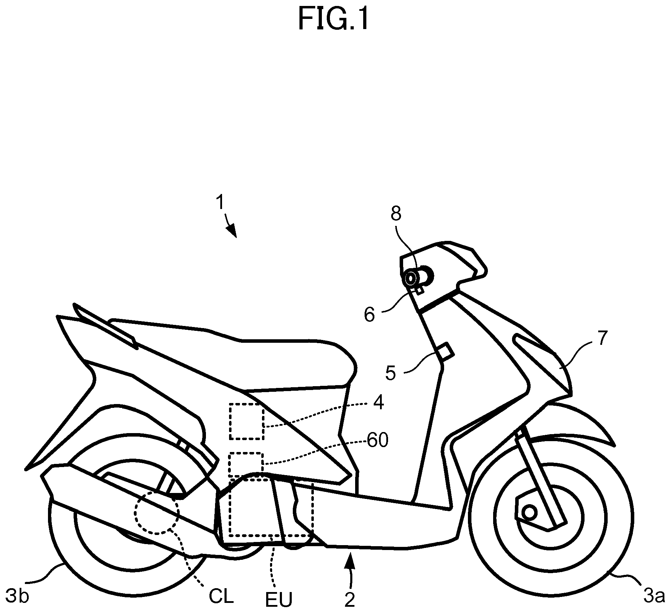

FIG. 1 shows an external appearance of a straddled vehicle according to an embodiment of the present invention.

A straddled vehicle 1 shown in FIG. 1 includes a vehicle body 2 and wheels 3a, 3b. The straddled vehicle 1 is, to be specific, a motorcycle.

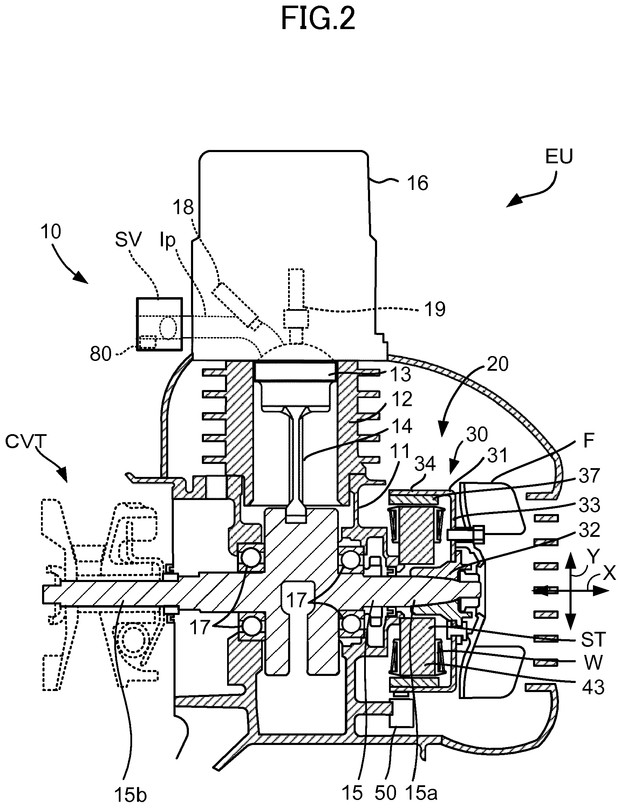

The straddled vehicle 1 includes an engine unit EU. The engine unit EU includes a single-cylinder engine 10 (see FIG. 2).

The rear wheel 3b is a drive wheel. The wheel 3b receives a rotational force outputted from the single-cylinder engine 10, to drive the straddled vehicle 1.

The straddled vehicle 1 includes a main switch 5. The main switch 5 is a switch for supplying power to each part of the straddled vehicle 1. The straddled vehicle 1 includes a starter switch 6. The starter switch 6 is a switch for starting the single-cylinder engine 10. The straddled vehicle 1 includes an acceleration command part 8. The acceleration command part 8 is an operation element for instructing the straddled vehicle 1 be accelerated in accordance with an operation thereon. The acceleration command part 8 is displaced in accordance with an operation thereon. The acceleration command part 8 is, to be specific, an accelerator grip. The acceleration command part 8 is rotated in accordance with an operation thereon.

The straddled vehicle 1 includes a battery 4. The straddled vehicle 1 includes a control device 60 that controls each part of the straddled vehicle 1.

FIG. 2 is a partial cross-sectional view schematically showing an outline configuration of the engine unit EU shown in FIG. 1.

The engine unit EU includes the single-cylinder engine 10 and a permanent magnet type motor 20.

The single-cylinder engine 10 includes a crank case 11, a cylinder 12, a piston 13, a connecting rod 14, and a crankshaft 15. The piston 13 is arranged in the cylinder 12 such that the piston 13 is freely movable to and fro.

The crankshaft 15 is rotatably arranged in the crank case 11. The crankshaft 15 is coupled to the piston 13 with the connecting rod 14. A cylinder head 16 is attached to an upper portion of the cylinder 12. The cylinder 12, the cylinder head 16, and the piston 13 define a combustion chamber. The crankshaft 15 is supported on the crank case 11 via a pair of bearings 17 in a freely rotatable manner. The permanent magnet type motor 20 is attached to one end portion 15a of the crankshaft 15. A transmission CVT is attached to the other end portion 15b of the crankshaft 15. The transmission CVT is configured to change the gear ratio which is the ratio of an output rotation speed to an input rotation speed. The transmission CVT is configured to change the gear ratio corresponding to the rotation speed of the wheel relative to the rotation speed of the crankshaft 15.

The straddled vehicle 1 includes a clutch CL (see FIG. 1). The clutch CL is connected to the transmission CVT. The clutch CL is a centrifugal clutch. The clutch CL switches between states of allowing and blocking transmission of a rotational force from the crankshaft 15 to the wheel 3b which serves as a drive wheel. The clutch CL switches between the states of allowing and blocking transmission in accordance with the rotation speed of the crankshaft 15. When the rotation speed of the crankshaft 15 is less than a predetermined threshold, the clutch CL is in a blocking state. When the rotation speed of the crankshaft 15 is more than a predetermined threshold, the clutch CL is in a transmitting state. The predetermined threshold referred to herein may not always need to be a single fixed value in a strict sense. The predetermined threshold may be a value variable depending on running conditions, environmental conditions such as ambient temperature, and the like. The blocking state means a state in which transmission of a rotational force from the crankshaft to the drive wheel is not performed at all. The transmitting state means a state in which transmission of a rotational force from the crankshaft to the drive wheel is performed, including a state in which transmission of a partial rotational force is performed.

The engine unit EU is provided with a throttle valve SV and a fuel injector device 18. The throttle valve SV is arranged in an intake passage Ip that connects with the single-cylinder engine 10. The throttle valve SV is opened to a degree that is based on the amount of operation on the acceleration command part 8 (see FIG. 1). The throttle valve SV is a mechanical throttle valve. The throttle valve SV is mechanically coupled to the acceleration command part 8 with a cable (not shown). The throttle valve SV is opened in conjunction with an operation received by the acceleration command part 8. The throttle valve SV is opened to a degree that is according to the amount of operation on the acceleration command part 8. The throttle valve SV is opened to a degree that is according to the position of the acceleration command part 8.

The throttle valve SV supplies an amount of air to the single-cylinder engine 10, the amount corresponding to the degree of opening of the throttle valve SV. The throttle valve SV adjusts the amount of air to be supplied to the single-cylinder engine 10, by adjusting the amount of air flowing in accordance with the degree of opening of the throttle valve SV.

The throttle valve SV is provided with a throttle position sensor 80 that detects the degree of opening of throttle valve SV. The throttle position sensor 80 outputs a signal to the control device 60, the signal indicating the degree of opening of the throttle valve SV. The fuel injector device 18 injects a fuel, to supply the fuel to the combustion chamber. The fuel injector device 18 injects the fuel to air flowing in from the throttle valve SV and passing through the intake passage. A mixed gas containing the air and the fuel is supplied to the combustion chamber of the single-cylinder engine 10.

The single-cylinder engine 10 is also provided with a spark plug 19.

The single-cylinder engine 10 is an internal combustion engine. The single-cylinder engine 10 is supplied with a fuel. The single-cylinder engine 10 outputs a rotational force by performing a combustion operation in which the mixed gas is combusted. That is, the combustion of the mixed gas supplied to the combustion chamber, which contains the fuel, makes the piston 13 move to and fro. The crankshaft 15 is rotated along with the to-and-fro movement of the piston 13. The rotational force is outputted to the outside of the single-cylinder engine 10 via the crankshaft 15. The wheel 3b (see FIG. 1) receives the rotational force outputted from the single-cylinder engine 10 via the crankshaft 15, to drive the straddled vehicle 1.

The throttle valve SV adjusts the rotational force of the single-cylinder engine 10 by adjusting the amount of air to be supplied to the combustion chamber. The amount of air to be supplied to the combustion chamber is adjusted in accordance with the degree of opening of the throttle valve SV. The degree of opening of the throttle valve SV is adjusted in accordance with an operation on the acceleration command part 8 (see FIG. 1).

The fuel injector device 18 adjusts the rotational force outputted from the single-cylinder engine 10 by adjusting the amount of fuel supply. The fuel injector device 18 is controlled by the control device 60. The fuel injector device 18 is controlled so as to supply an amount of fuel corresponding to the amount of air supplied to the single-cylinder engine 10.

The single-cylinder engine 10 outputs the rotational force via the crankshaft 15. The rotational force of the crankshaft 15 is transmitted to the wheel 3b via the transmission CVT and a clutch CL (see FIG. 1). The straddled vehicle 1 is driven by the wheel 3b receiving the rotational force from the single-cylinder engine 10 via the crankshaft 15.

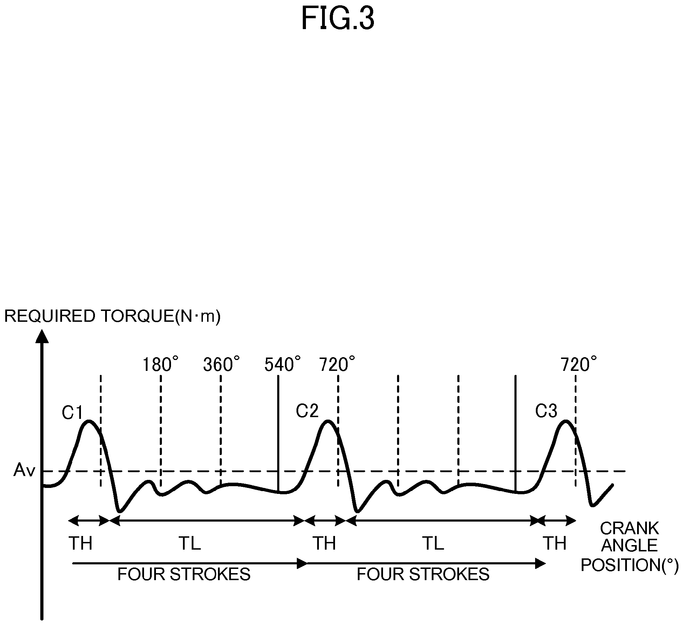

FIG. 3 is an illustrative diagram schematically showing the relationship between a crank angle position and a required torque of the single-cylinder engine 10. FIG. 3 shows the torque required for rotating the crankshaft 15 under a state where the single-cylinder engine 10 does not perform the combustion operation.

The single-cylinder engine 10 is a four-stroke engine. The single-cylinder engine 10 has, during four strokes, a high-load region TH in which a high load is put on rotation of the crankshaft 15 and a low-load region TL in which a load put on rotation of the crankshaft 15 is lower than that of the high-load region TH. The high-load region means a region in one combustion cycle of the single-cylinder engine 10 where a load torque is higher than an average value Av of the load torque over the one combustion cycle. From the viewpoint of the rotation angle of the crankshaft 15, the low-load region TL is equal to or wider than the high-load region TH. To be specific, the low-load region TL is wider than the high-load region TH. In other words, a rotation angle region corresponding to the low-load region TL is wider than a rotation angle region corresponding to the high-load region TH. During rotation, the single-cylinder engine 10 repeats an intake stroke, a compression stroke, a combustion stroke (expansion stroke), and an exhaust stroke. The compression stroke overlaps the high-load region TH.

One combustion cycle of the single-cylinder engine 10 includes one intake stroke, one compression stroke, one combustion stroke, and one exhaust stroke.

In the intake stroke, an amount of mixed gas is supplied to the combustion chamber, the amount corresponding to the degree of opening of the throttle valve SV. In the compression stroke, the piston 13 compresses the mixed gas contained in the combustion chamber. In the expansion stroke, the mixed gas ignited by the spark plug 19 is combusted, and pushes the piston 13. In the exhaust stroke, a gas remaining after the combustion, which is an exhaust gas, is discharged from the combustion chamber.

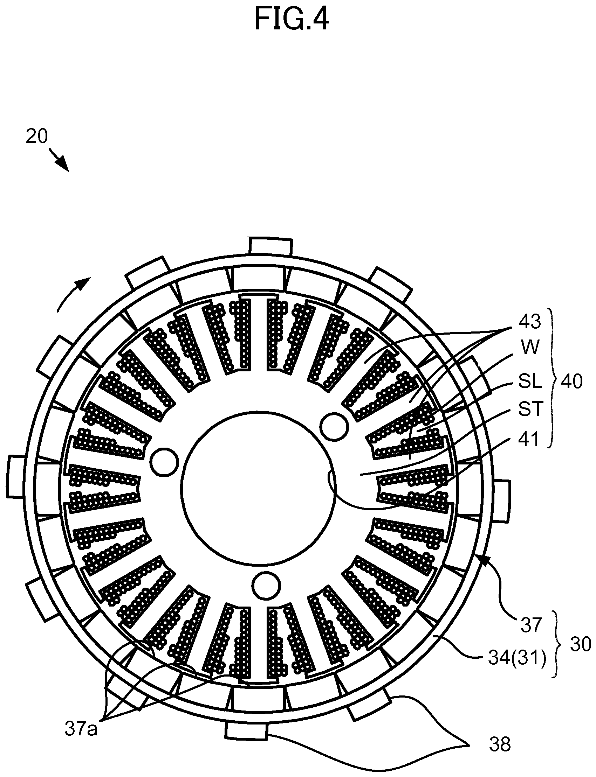

FIG. 4 is a cross-sectional view of the permanent magnet type motor 20 shown in FIG. 2, as sectioned perpendicular to its rotation axis line.

The permanent magnet type motor 20 is described with reference to FIGS. 2 and 4.

The permanent magnet type motor 20 is a three-phase brushless motor of permanent magnet type. The permanent magnet type motor 20 functions also as a three-phase brushless generator of permanent magnet type.

The permanent magnet type motor 20 includes a rotor 30 and a stator 40. The permanent magnet type motor 20 of this embodiment is of radial gap type. The permanent magnet type motor 20 is of outer rotor type. That is, the rotor 30 is an outer rotor, and the stator 40 is an inner stator.

The rotor 30 includes a rotor body part 31. The rotor body part 31 is made of, for example, a ferromagnetic material. The rotor body part 31 is in the shape of a cylinder with a bottom. The rotor body part 31 includes a cylindrical boss portion 32, a disk-shaped bottom wall portion 33, and a back yoke portion 34 having a cylindrical shape. The bottom wall portion 33 and the back yoke portion 34 are integrally formed. Here, it may also be acceptable that the bottom wall portion 33 and the back yoke portion 34 are formed as separate parts. The bottom wall portion 33 and the back yoke portion 34 are secured to the crankshaft 15 via the cylindrical boss portion 32. A winding to which a current is supplied is not provided in the rotor 30.

The rotor 30 includes a permanent magnet part 37. The rotor 30 includes a plurality of magnetic pole portions 37a. The plurality of magnetic pole portions 37a are formed by the permanent magnet part 37. The plurality of magnetic pole portions 37a are provided on an inner circumferential surface of the back yoke portion 34. In this embodiment, the permanent magnet part 37 includes a plurality of permanent magnets. That is, the rotor 30 includes a plurality of permanent magnets. The plurality of magnetic pole portions 37a are provided in the plurality of permanent magnets, respectively.

The permanent magnet part 37 may alternatively be configured as a single annular permanent magnet. In such a configuration, the single permanent magnet is magnetized such that the plurality of magnetic pole portions 37a appear side by side on the inner circumferential surface.

The plurality of magnetic pole portions 37a are provided such that N pole and S pole appear alternately with respect to a circumferential direction of the permanent magnet type motor 20. In this embodiment, the number of magnetic poles of the rotor 30 opposed to the stator 40 is twenty-four. The number of magnetic poles of the rotor 30 means the number of magnetic poles opposed to the stator 40. No magnetic material is arranged between the magnetic pole portions 37a and the stator 40.

The magnetic pole portions 37a are provided outside the stator 40 with respect to the radial direction of the permanent magnet type motor 20. The back yoke portion 34 is provided outside the magnetic pole portions 37a with respect to the radial direction. The number of magnetic pole portions 37a included in the permanent magnet type motor 20 is more than the number of teeth 43.

The rotor 30 may be of interior permanent magnet type (IPM type) in which the magnetic pole portions 37a are embedded in a magnetic element, but it preferably is of surface permanent magnet type (SPM type) in which the magnetic pole portions 37a are exposed from a magnetic element as illustrated in this embodiment.

A cooling fan F is provided to the bottom wall portion 33 of the rotor 30.

The stator 40 includes a stator core ST and a plurality of stator windings W. The stator core ST includes a plurality of teeth 43 arranged at intervals with respect to the circumferential direction. The plurality of teeth 43 integrally extend from the stator core ST toward radially outside. In this embodiment, eighteen teeth 43 in total are arranged at intervals with respect to the circumferential direction. In other words, the stator core ST has eighteen slots SL in total that are arranged at intervals with respect to the circumferential direction. The teeth 43 are arranged at equal intervals with respect to the circumferential direction.

The number of magnetic pole portions 37a included in the rotor 30 is more than the number of teeth 43. The number of magnetic pole portions is equal to 4/3 of the number of slots.

The stator winding W is wound around each of the teeth 43. That is, the multi-phase stator windings W are arranged through the slots SL. In the state shown in FIG. 4, the stator windings W are in the slots SL. Each of the multi-phase stator windings W belongs to any of U-phase, V-phase, and W-phase. The stator windings W are arranged in the order of U-phase, V-phase, and W-phase, for example.

The rotor 30 includes, on its outer surface, a plurality of detection object parts 38 for detection of the rotation position of the rotor 30. Magnetic effects are used to detect the plurality of detection object parts 38. The plurality of detection object parts 38 arranged at intervals with respect to the circumferential direction are provided on the outer surface of the rotor 30. The detection object parts 38 are made of a ferromagnetic material.

The rotor position detection device 50 is a device that detects the position of the rotor 30. The rotor position detection device 50 is provided at a position allowed to be opposed to the plurality of detection object parts 38.

The rotor 30 of the permanent magnet type motor 20 is connected to the crankshaft 15 such that the rotor 30 is rotated along with rotation of the crankshaft 15. More specifically, the rotor 30 of the permanent magnet type motor 20 is connected to the crankshaft 15 such that the rotor 30 is rotated with its speed ratio fixed relative to the crankshaft 15. The rotor 30 is directly connected to the crankshaft 15 of the single-cylinder engine 10.

In this embodiment, the rotor 30 is attached to the crankshaft 15 without interposition of a power transmission mechanism (such as a belt, a chain, a gear, a speed reducer, or a speed increaser). The rotor 30 is rotated with a speed ratio of 1:1 relative to the crankshaft 15. The permanent magnet type motor 20 is configured such that the rotor 30 is driven in forward rotation at a time of combustion operation of the single-cylinder engine 10.

The rotation axis line of the permanent magnet type motor 20 is substantially coincident with the rotation axis line of the crankshaft 15.

At a time of engine start, the permanent magnet type motor 20 drives the crankshaft 15 in forward rotation to start the single-cylinder engine 10. At a time of combustion operation of the single-cylinder engine 10, the permanent magnet type motor 20 is driven by the single-cylinder engine 10 to generate power. That is, the permanent magnet type motor 20 has both the function for driving the crankshaft 15 in forward rotation to start the single-cylinder engine 10 and the function for being driven by the single-cylinder engine 10 to generate power at a time of combustion operation of the single-cylinder engine 10. During at least part of a time period following the start of the single-cylinder engine 10, the permanent magnet type motor 20 is driven in forward rotation by the crankshaft 15 to function as a generator.

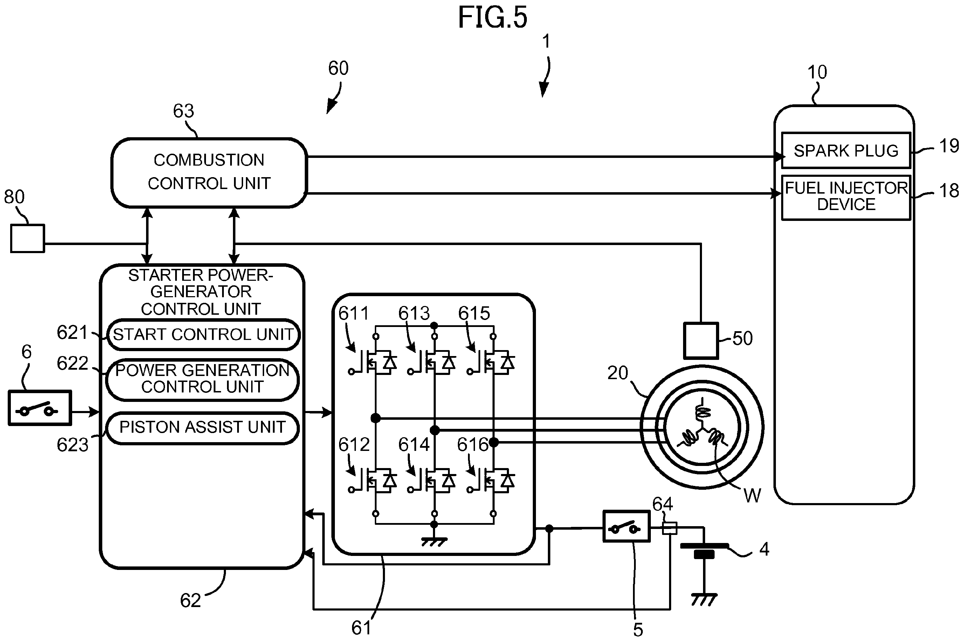

FIG. 5 is a block diagram outlining an electrical configuration of the straddled vehicle 1 shown in FIG. 1.

The straddled vehicle 1 includes an inverter 61. The control device 60 controls components of the straddled vehicle 1 including the inverter 61.

The permanent magnet type motor 20 and the battery 4 are connected to the inverter 61. When the permanent magnet type motor 20 operates as a motor, the battery 4 supplies power to the permanent magnet type motor 20. The battery 4 is charged with power generated by the permanent magnet type motor 20.

The battery 4 is connected to the inverter 61 and a power consuming apparatus via the main switch 5. The power consuming apparatus is an apparatus that consumes power when operating. The power consuming apparatus includes a headlight 7 (see FIG. 1), for example.

The inverter 61 includes a plurality of switching parts 611 to 616. In this embodiment, the inverter 61 includes six switching parts 611 to 616.

The switching parts 611 to 616 constitute a three-phase bridge inverter. The plurality of switching parts 611 to 616 are connected to the respective phases of the multi-phase stator windings W. More specifically, among the plurality of switching parts 611 to 616, every two switching parts that are connected in series constitute a half bridge. The half bridge corresponding to each phase is connected in parallel with the battery 4. Ones of the switching parts 611 to 616 constituting the half bridge of each phase are connected to the corresponding phase of the multi-phase stator windings W.

The switching parts 611 to 616 control a current flowing between the battery 4 and the permanent magnet type motor 20. The switching parts 611 to 616 selectively allow or block the passing of a current between the battery 4 and the multi-phase stator windings W.

In more detail, when the permanent magnet type motor 20 functions as a motor, switching between causing and stopping conduction of the multi-phase stator windings W is implemented by on/off-operation of the switching parts 611 to 616.

When the permanent magnet type motor 20 functions as a generator, switching between allowing and blocking the passing of a current between each of the stator windings W and the battery 4 is implemented by on/off-operation of the switching parts 611 to 616. By switching on/off the switching parts 611 to 616 one after another, a control of a voltage and a rectification of a three-phase AC outputted from the permanent magnet type motor 20 are performed. The switching parts 611 to 616 control a current outputted from the permanent magnet type motor 20 to the battery 4.

Each of the switching parts 611 to 616 has a switching element. The switching element is, for example, a transistor and in more detail, an FET (Field Effect Transistor).

The fuel injector device 18, the spark plug 19, and the battery 4 are connected to the control device 60. A throttle position sensor 80 is also connected to the control device 60. The control device 60 obtains the degree of opening of the throttle valve SV based on a result of detection performed by the throttle position sensor 80. The degree of opening of the throttle valve SV represents the amount of operation on the acceleration command part 8. The control device 60 obtains the amount of operation on the acceleration command part 8 and the rate of increase in the amount of operation based on a result of detection performed by the throttle position sensor 80.

The rotor position detection device 50 is also connected to the control device 60. The control device 60 obtains the rotation speed of the crankshaft 15 based on a result of detection performed by the rotor position detection device 50.

The control device 60 includes a starter power-generator control unit 62 and a combustion control unit 63.

The starter power-generator control unit 62 controls on/off-operation of each of the switching parts 611 to 616, to control the operation of the permanent magnet type motor 20. The starter power-generator control unit 62 includes a start control unit 621, a power generation control unit 622, and a piston assist unit 623.

The combustion control unit 63 controls the spark plug 19 and the fuel injector device 18, to control the combustion operation of the single-cylinder engine 10. The combustion control unit 63 controls the spark plug 19 and the fuel injector device 18, to control the rotational force of the single-cylinder engine 10. The combustion control unit 63 controls the spark plug 19 and the fuel injector device 18 in accordance with the degree of opening of the throttle valve SV which is represented by an output signal of the throttle position sensor 80.

The control device 60 is composed of a computer including a central processing unit (not shown) and a storage device (not shown). The central processing unit executes arithmetic processing based on a control program. The storage device stores data relating to programs and arithmetic operations.

The combustion control unit 63 and the starter power-generator control unit 62 including the start control unit 621, the power generation control unit 622, and the piston assist unit 623 are implemented by a computer (not shown) and a control program executable by the computer. Thus, below-described operations performed respectively by the combustion control unit 63 and the starter power-generator control unit 62 including the start control unit 621, the power generation control unit 622, and the piston assist unit 623 can be considered as operations performed by the control device 60. The starter power-generator control unit 62 and the combustion control unit 63 may be, for example, either configured as separate devices placed at a distance from each other, or integrated as a single device.

The starter switch 6 is connected to the control device 60. The starter switch 6 is actuated by a rider at a time of starting the single-cylinder engine 10. The starter power-generator control unit 62 of the control device 60 detects a charge level of the battery 4. The starter power-generator control unit 62 detects the charge level of the battery 4 by detecting the voltage and current of the battery 4.

The main switch 5 supplies power to the control device 60 in accordance with operations performed thereon.

The starter power-generator control unit 62 and the combustion control unit 63 of the control device 60 control the single-cylinder engine 10 and the permanent magnet type motor 20. The starter power-generator control unit 62 controls the inverter 61.

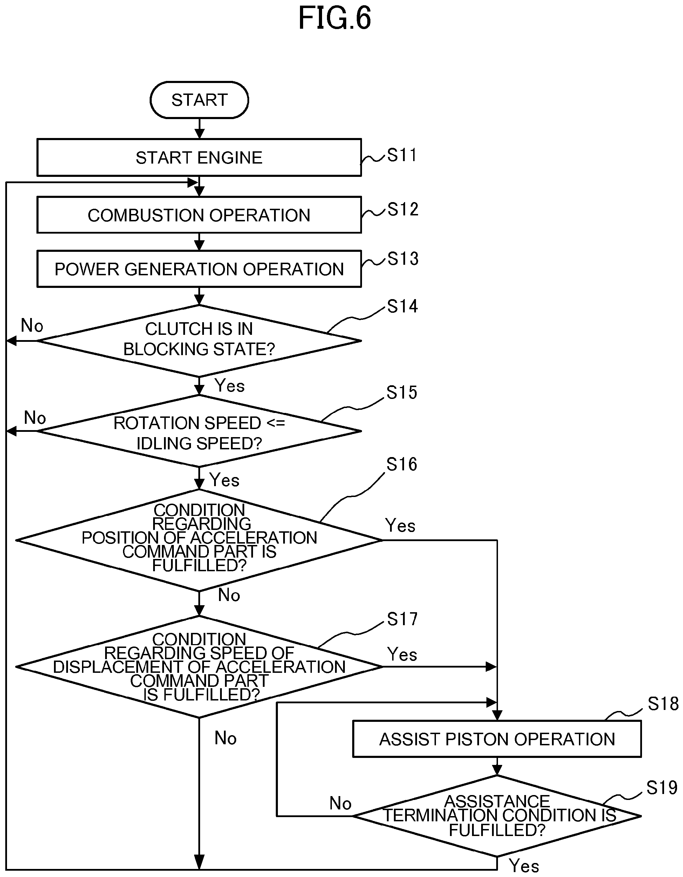

FIG. 6 is a flowchart illustrating operations of the straddled vehicle 1.

Operations of the straddled vehicle 1 are described with reference to FIGS. 5 and 6. The operations of the straddled vehicle 1 are controlled by the control device 60.

The control device 60 starts the single-cylinder engine 10 (S11). More specifically, when the main switch 5 is in on-state and the starter switch 6 is in on-state, the start control unit 621 of the starter power-generator control unit 62 starts the single-cylinder engine 10. The start control unit 621 controls the inverter 61 such that the permanent magnet type motor 20 rotates the crankshaft 15. The combustion control unit 63 directs the fuel injector device 18 to supply the fuel. The combustion control unit 63 directs the spark plug 19 to cause ignition.

After starting the single-cylinder engine 10, the control device 60 performs the combustion operation of the single-cylinder engine 10 (S12). To be specific, the combustion control unit 63 directs the single-cylinder engine 10 to perform the combustion operation. The combustion control unit 63 directs the fuel injector device 18 to supply the fuel. The combustion control unit 63 directs the spark plug 19 to cause ignition. The combustion control unit 63 controls the amount of fuel to be supplied from the fuel injector device 18, in accordance with the amount of air supplied from the throttle valve SV. In more detail, the combustion control unit 63 calculates the amount of air based on pressure in the intake passage Ip and the rotation speed of the crankshaft 15. The combustion control unit 63 directs the fuel injector device 18 to supply the fuel in an amount corresponding to the amount of air. The combustion control unit 63 supplies the fuel to the fuel injector device 18 in such a manner that a greater amount of fuel is supplied as the throttle valve SV is opened to a higher degree.

The piston 13 is moved to and fro by the combustion of the mixed gas in the single-cylinder engine 10. The crankshaft 15 is rotated along with the to-and-fro movement of the piston 13.

The control device 60 directs the permanent magnet type motor 20 to perform a power generation operation (S13). To be specific, the power generation control unit 622 of the starter power-generator control unit 62 directs the permanent magnet type motor 20 to perform the power generation operation. The power generation control unit 622 controls the inverter 61 such that the permanent magnet type motor 20 generates power. As the permanent magnet type motor 20 generates power, the battery 4 is charged.

In next step S14, the control device 60 determines whether or not the clutch CL (see FIG. 1) is in the blocking state. The control device 60 identifies the state of the clutch CL based on the rotation speed of the single-cylinder engine 10. The control device 60 determines that the clutch CL is in the blocking state if the rotation speed of the single-cylinder engine 10 is lower than an engagement speed which serves as the predetermined threshold.

Upon determination that the clutch CL (see FIG. 1) is in the blocking state (S14:Yes), the control device 60 determines whether or not the rotation speed of the crankshaft 15 is equal to or less than an idling rotation speed (S15).

When the rotation speed of the crankshaft 15 is equal to or less than the idling rotation speed (S15:Yes), the throttle valve SV is not in a full-open state. Upon determination that the rotation speed of the crankshaft 15 is equal to or less than the idling rotation speed (S15:Yes), the control device 60 determines whether or not a condition for assisting the piston operation is fulfilled (S16, S17). To be exact, the piston assist unit 623 of the starter power-generator control unit 62 makes the determination about the condition for assisting the piston operation.

Specifically, the control device 60 determines whether or not at least one of a condition regarding the amount of operation on the acceleration command part 8 (S16) and a condition regarding the rate of increase in the amount of operation on the acceleration command part 8 (S17) is satisfied.

In step S16, for the determination about the condition regarding the amount of operation on the acceleration command part 8, the control device 60 determines whether or not an operation on the acceleration command part 8 exceeds a predetermined operation amount limit. The amount of operation on the acceleration command part 8 is represented by the degree of opening of the throttle valve SV. More specifically, the control device 60 determines the amount of operation on the acceleration command part 8 based on a result of detection performed by the throttle position sensor 80.

For example, if the amount of operation on the acceleration command part 8 exceeds the operation amount limit which corresponds to 80% of the full-open of the throttle valve SV, the control device 60 determines that the condition regarding the amount of operation on the acceleration command part 8 is satisfied.

In step S17, for the determination about the condition regarding the rate of increase in the amount of operation on the acceleration command part 8, the control device 60 determines whether or not the rate of increase in the amount of operation on the acceleration command part 8 exceeds a predetermined speed limit. The rate of increase in the amount of operation on the acceleration command part 8 is represented by the speed at which the throttle valve SV. Specifically, the control device 60 determines the rate of increase in the amount of operation on the acceleration command part 8 based on a result of detection performed by the throttle position sensor 80.

For example, in a case of periodically detecting the amount of operation on the acceleration command part 8, the control device 60 determines that the condition regarding the rate of increase in the amount of operation on the acceleration command part 8 is satisfied if the speed of increase in the amount of operation, which means the increase rate of the amount of operation per detection period, exceeds the speed limit. For example, in a case where the amount of operation on the acceleration command part 8 is detected every 0.1 seconds, it is determined that the condition regarding the rate of increase in the amount of operation on the acceleration command part 8 is satisfied if the rate of displacement per 0.1 seconds exceeds a value corresponding to 20% of the full-open of the throttle valve SV.

Triggered by the degree of opening of the throttle valve SV being increased so as to satisfy at least one of the condition regarding the amount of operation on the acceleration command part 8 and the condition regarding the speed of increase in the amount of operation on the acceleration command part 8 (S16:Yes; or S17:Yes), the control device 60 assists the piston operation (S18). More specifically, the piston assist unit 623 of the starter power-generator control unit 62 assists the piston operation.

As a condition for starting to assist the piston operation, the control device 60 adopts the logical OR of the condition regarding the amount of operation on the acceleration command part 8 (S16) and the condition regarding the rate of increase in the amount of operation on the acceleration command part 8 (S17). Thus, for example, even if the condition regarding the amount of operation on the acceleration command part 8 is not satisfied, the control device 60 starts to assist the piston operation (S18) upon satisfaction of the condition regarding the rate of increase in the amount of operation on the acceleration command part 8.

Upon satisfaction of at least one of the condition regarding the amount of operation on the acceleration command part 8 and the condition regarding the rate of increase in the amount of operation on the acceleration command part 8, the control device 60 assists the piston operation irrespective of how long a state of the increase in the amount of operation continues. For example, when the amount of operation on the acceleration command part 8 (the degree of opening of the throttle valve SV) is 0% which corresponds to a non-operating state and then the amount of operation that is measured 0.1 seconds later exceeds 20%; the control device 60 determines that the rate of increase in the amount of operation exceeds the speed limit. The control device 60 then assists the piston operation without waiting until the increase in the amount of operation on the acceleration command part 8 continues.

In this manner, the assistance to the piston operation is promptly performed in response to an abrupt operation on the acceleration command part 8.

To assist the piston operation in step S18, the control device 60 controls the plurality of switching parts 611 to 616 included in the inverter 61 such that power is supplied from the battery 4 to the permanent magnet type motor 20. Thus, the control device 60 directs the permanent magnet type motor 20 to assist the to-and-fro movement of the piston 13. The control device 60 causes power running of the permanent magnet type motor 20. At this time, specifically, the permanent magnet type motor 20 applies a force to the piston 13 via the crankshaft 15, the force cooperating with a force generated by the combustion in the single-cylinder engine 10 to make the piston 13 move to and fro.

The control device 60 controls the switching parts 611 to 616 based on a vector control scheme, so that the permanent magnet type motor 20 is driven with power of the battery 4. When driving the permanent magnet type motor 20, for example, the control device 60 may adopt 120-degree conduction for performing on/off-operation of the switching parts 611 to 616.

In the assistance to the piston operation in step S18, the permanent magnet type motor 20 drives the crankshaft 15, to assist the to-and-fro movement of the piston 13 moved in conjunction with the crankshaft 15.

In subsequent step S19, the control device 60 determines whether or not an assistance termination condition regarding the piston operation is fulfilled. If the assistance termination condition is fulfilled (S19:Yes), the control device 60 terminates the assistance to the piston operation. If the assistance termination condition is not fulfilled (S19:No), the control device 60 continues the assistance to the piston operation (S18).

For the determination about the assistance termination condition in step S19, the control device 60 determines whether or not the rotation speed of the crankshaft 15 is equal to or higher than a predetermined speed. Alternatively, for example, the control device 60 may determine whether or not the crankshaft 15 has rotated through a predetermined number of cycles of the single-cylinder engine 10, for the determination about the assistance termination condition.

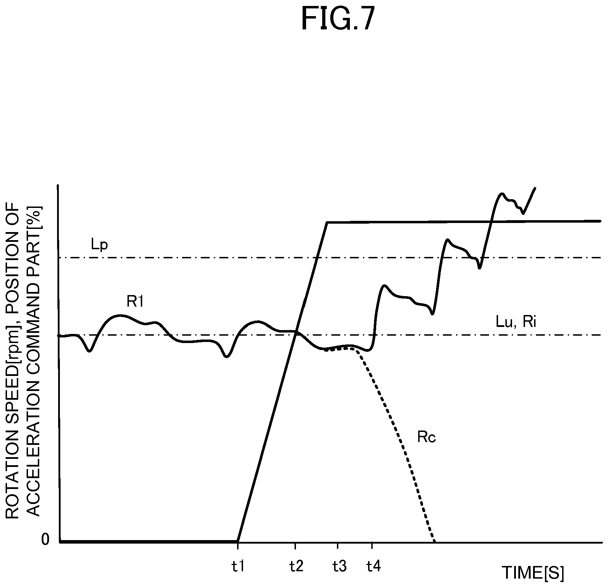

FIG. 7 is a timing chart showing an operation on the acceleration command part 8 and a change in the crank rotation speed.

In the chart shown in FIG. 7, the vertical axis represents the rotation speed of the crankshaft and the amount of operation on the acceleration command part 8. The amount of operation on the acceleration command part 8 is expressed in the form of the degree of opening of the throttle valve SV with 100% representing the full-open state.

In the chart, a solid line R1 indicates the rotation speed of the crankshaft 15. Before time t1, the single-cylinder engine 10 is in an idling state. In the idling state, the rotation speed R1 varies according to each stroke of the single-cylinder engine 10. For example, the rotation speed R1 exhibits a downward peak at around a compression stroke. This is because the piston 13 (see FIG. 1) receives a compression reaction force in the compression stroke. The rotation speed R1 exhibits a large rise at around a combustion stroke. In the idling state, the crankshaft 15 is rotating at an average rotation speed Ri which is substantially equal to an idling rotation speed Lu set for the single-cylinder engine 10.

At time t1, the rider operates the acceleration command part 8, to displace the acceleration command part 8. The degree of opening of the throttle valve SV is gradually opened from 0% to 90%. At time t2, the amount of operation on the acceleration command part 8 exceeds an operation amount limit Lp which corresponds to 80% opening of the throttle valve SV, and therefore the condition regarding the amount of operation on the acceleration command part 8 (S16 in FIG. 6) is satisfied. At this time, the control device 60 controls the switching parts 611 to 616 such that power is supplied from the battery 4 to the permanent magnet type motor 20. Thus, the control device 60 directs the permanent magnet type motor 20 to assist the to-and-fro movement of the piston 13. At or after time t2, the rotation speed of the crankshaft 15 is higher than that obtained when the permanent magnet type motor 20 provides no assistance (see a broken line Rc).

After time t1, the degree of opening of the throttle valve SV increases. In an intake stroke (near time t2) which comes after time t1, an increased amount of air is supplied to the combustion chamber as compared with in the idling state. Thus, in a compression stroke (at or after time t3) which comes after the degree of opening of the throttle valve SV is increased at time t1, the piston 13 compresses a larger amount of air as compared with in the idling state.

In the chart, the broken line Rc indicates the rotation speed of the crankshaft 15 under the condition that the permanent magnet type motor 20 does not assist the operation of the piston 13.

When the piston 13 compresses air the amount of which is increased as compared with in the idling state, the piston 13 receives a high compression reaction force. In a case where the piston 13 does not have energy for overcoming the compression reaction force, the piston 13 cannot compress the increased amount of air. The operation of the piston 13 is retarded. As a result, the operations of the piston 13 and the crankshaft 15 are stopped as indicated by the broken line Rc.

In the single-cylinder engine 10 of this embodiment, on the other hand, the permanent magnet type motor 20 assists the operation of the piston 13. The control device 60 promptly starts to assist the operation of the piston 13 in accordance with the amount of operation on the acceleration command part 8. In the example shown in FIG. 7, the permanent magnet type motor 20 starts to assist the operation of the piston 13 via the crankshaft 15, not in the compression stroke but at time t2 which is prior to the compression stroke. The crankshaft 15 is accelerated prior to the compression stroke. At time point (t3) where the compression stroke begins, an accumulation of kinetic energy generated by the assistance from the permanent magnet type motor 20 is retained in the piston 13 and the crankshaft 15. In addition, during the compression stroke (at or after t3) as well, the operation of the piston 13 is assisted by the permanent magnet type motor 20. The assistance from the permanent magnet type motor 20, together with a force generated by the previous combustion (near t1), allows the piston 13 to overcome the compression reaction force. The piston 13 compresses the increased amount of mixed gas more quickly than when the permanent magnet type motor 20 does not assist the operation of the piston 13.

At or after time t4, the increased amount of mixed gas is combusted, so that the rotation speed of the crankshaft 15 significantly increases. The single-cylinder engine 10 is able to, after the rotation speed of the crankshaft 15 once rises, compress and combust an increased amount of air in a stable manner. As a result, power generated by the combustion operation which is a function inherent in the engine is increased like a chain reaction. The rotation speed of the crankshaft 15 rapidly increases accordingly.

In this embodiment, after the rotation speed of the crankshaft 15 increases, the control device 60 continuously directs the permanent magnet type motor 20 to assist the operation of the piston 13. The control device 60 continues the assistance to the operation of the piston 13 until the rotation speed of the permanent magnet type motor 20, which means the rotation speed of the crankshaft 15, reaches an upper limit speed within which power running is enabled with the voltage of the battery 4. This makes the operation of the piston 13 more stable.

After the rotation speed of the crankshaft 15 reaches the upper limit speed, the control device 60 controls the switching parts 611 to 616 such that the permanent magnet type motor 20 generates power. The battery 4 is charged accordingly.

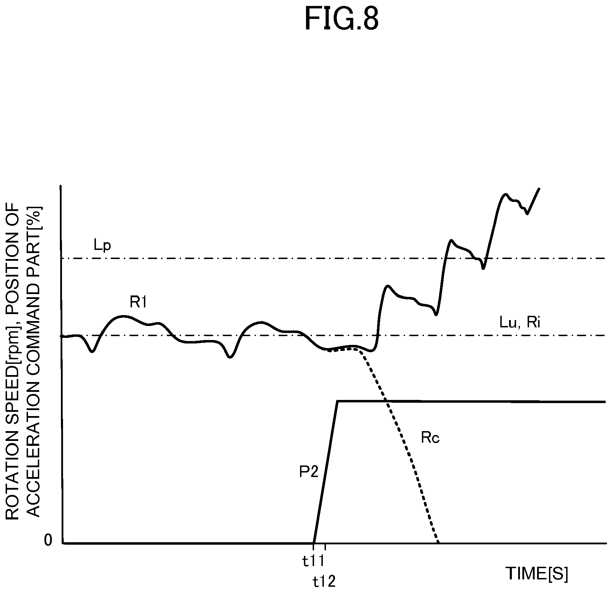

FIG. 8 is a timing chart showing an operation on the acceleration command part 8 and a change in the crank rotation speed under an operation condition different from that of FIG. 7.

In FIG. 8, a solid line P2 represents a change in the amount of operation on the acceleration command part 8, the operation different from that of FIG. 7. In the example shown in FIG. 8, as indicated by the solid line P2, the acceleration command part 8 is operated more rapidly. The operation on the acceleration command part 8 is started at time t11. Here, the final amount of operation on the acceleration command part 8 is smaller than that of FIG. 7. The acceleration command part 8 is displaced in a range of 0% to 40% opening of the throttle valve SV.

The speed at which the acceleration command part 8 is displaced by the operation is higher than the speed limit set for the control device 60. The control device 60, therefore, starts to assist the operation of the piston 13 at time t12 which is immediately after the acceleration command part 8 starts displacement at time t11. The control device 60 starts to assist the operation of the piston 13, without waiting until the amount of operation on the acceleration command part 8 exceeds the operation amount limit Lp. The control device 60 starts to assist the operation of the piston 13, without waiting until the increase in the amount of operation on the acceleration command part 8 continues.

The control device 60 promptly starts to assist the operation of the piston 13 in accordance with the rate of increase in the amount of operation on the acceleration command part 8. In the example shown in FIG. 8, the permanent magnet type motor 20 starts to assist the operation of the piston 13 via the crankshaft 15 at time t12 which is prior to a compression stroke. This makes the crankshaft 15 accelerated before the compression stroke comes. At a time point when the compression stroke comes, therefore, an accumulation of kinetic energy generated by the assistance from the permanent magnet type motor 20 is retained in the piston 13 and the crankshaft 15. In addition, during the compression stroke as well, the operation of the piston 13 is assisted by the permanent magnet type motor 20. The assistance from the permanent magnet type motor 20, together with a force generated by the previous combustion, allows the piston 13 to overcome the compression reaction force. The piston 13 compresses the increased amount of mixed gas more quickly than when the permanent magnet type motor 20 does not assist the operation of the piston 13.

### [DESCRIPTION OF THE REFERENCE SIGNS]

- 1: straddled vehicle
- 3b: wheel (drive wheel)
- 4: battery
- 8: acceleration command part
- 10: single-cylinder engine
- 13: piston
- 15: crankshaft
- 20: permanent magnet type motor
- 30: rotor
- 40: stator
- 60: control device
- 61: inverter
- 611 to 616: switching part

## Claims

1. A straddled vehicle comprising:
a single-cylinder engine (10) including a piston (13) and a crankshaft (15), the piston (13) is provided in a cylinder (12) and moveable to and fro by combustion of a mixed gas containing air and a fuel, the crankshaft (15) is configured to be rotated along with the to-and-fro movement of the piston (13);
a drive wheel (3b) configured to receive a rotational force outputted from the single-cylinder engine (10) via the crankshaft (15) and to drive the straddled vehicle;
an acceleration command part (8) configured to instruct that the straddled vehicle be accelerated in accordance with an operation thereon;
a throttle valve (SV) arranged in an intake passage (Ip) connecting with the single-cylinder engine (10), and configured to be opened to a degree that is based on the amount of operation on the acceleration command part (8) so that an amount of the air is supplied to the single-cylinder engine (10), the amount corresponding to the degree of opening;
a permanent magnet type motor (20) including a rotor (30) and a permanent magnet, the rotor (30) is connected directly or indirectly to the crankshaft (15) so as to be rotatable in response to rotation of the crankshaft (15), the permanent magnet provided to the rotor (30);
a battery (4);
an inverter (61) including a plurality of switching parts (611 to 616) configured to control a current flowing between the battery (4) and the permanent magnet type motor (20); and
a control device (60) configured to control the plurality of switching parts (611 to 616) so as to assist a piston operation by directing the permanent magnet type motor (20) to apply a force to the piston (13) via the crankshaft (15) such that the force cooperates with a force generated by combustion in the single-cylinder engine (10) to move the piston (13) to and fro, the control is triggered by the amount of operation on the acceleration command part (8) being increased when logical OR of a condition regarding the amount of operation on the acceleration command part (8) and a condition regarding the rate of increase in the amount of operation on the acceleration command part (8) is satisfied irrespective of how long a state of the increase in the amount of operation on the acceleration command part (8) continues under a state where the throttle valve (SV) is not in a full-open state and the piston (13) is moved to and fro by combustion of the mixed gas.

2. A straddled vehicle according to claim 1, comprising a throttle position sensor (80) configured to detect the degree of opening of the throttle valve (SV), wherein
the control device (60) is configured to make determination about the rate of increase in the amount of operation on the acceleration command part (8) and the amount of operation on the acceleration command part (8) based on a result of detection performed by the throttle position sensor (80).

3. A straddled vehicle according to claim 1 or 2, further comprising a clutch (CL) configured to switch between states of allowing and blocking transmission of a rotational force from the crankshaft (15) to the drive wheel (3b) in accordance with the rotation speed of the crankshaft (15), wherein
in at least part of a time period during which the clutch (CL) blocks transmission of the rotational force, the control device (60) controls the switching parts (611 to 616) so as to assist the piston (13) operation, triggered by the amount of operation on the acceleration command part (8).

4. A straddled vehicle according to any one of claims 1 to 3, wherein in a case where the rotation speed of the crankshaft (15) is equal to or less than an idling rotation speed of the single-cylinder engine (10), the control device (60) controls the plurality of switching parts (611 to 616) so as to assist the piston (13) operation, triggered by the amount of operation on the acceleration command part (8).

5. A straddled vehicle according to any one of claims 1 to 4, wherein the throttle valve is a mechanical throttle valve (SV) mechanically coupled to the acceleration command part (8) with a cable, and
the control device (60) is configured to control the plurality of switching parts (611 to 616) so as to assist the piston (13) operation, triggered by the amount of operation on the acceleration command part (8), which is mechanically coupled to the mechanical throttle valve (SV).

6. A method for controlling a straddled vehicle, the straddled vehicle comprising:
a single-cylinder engine (10) including a piston (13) and a crankshaft (15), the piston (13) is provided in a cylinder (12) and moveable to and fro by combustion of a mixed gas containing air and a fuel, the crankshaft (15) is configured to be rotated along with the to-and-fro movement of the piston (13);
a drive wheel (3b) configured to receive a rotational force outputted from the single-cylinder engine (10) via the crankshaft (15) and to drive the straddled vehicle;
an acceleration command part (8) configured to instruct that the straddled vehicle be accelerated in accordance with an operation thereon;
a throttle valve (SV) arranged in an intake passage (Ip) connecting with the single-cylinder engine (10), and configured to be opened to a degree that is based on the amount of operation on the acceleration command part (8) so that an amount of the air is supplied to the single-cylinder engine (10), the amount corresponding to the degree of opening;
a permanent magnet type motor (20) including a rotor (30) and a permanent magnet, the rotor (30) is connected directly or indirectly to the crankshaft (15) so as to be rotatable in response to rotation of the crankshaft (15), the permanent magnet provided to the rotor (30);
a battery (4); and
an inverter (61) including a plurality of switching parts (611 to 616) configured to control a current flowing between the battery (4) and the permanent magnet type motor (20); the method comprising:
controlling the plurality of switching parts (611 to 616) so as to assist a piston operation by directing the permanent magnet type motor (20) to apply a force to the piston (13) via the crankshaft (15) such that the force cooperates with a force generated by combustion in the single-cylinder engine (10) to move the piston (13) to and fro, the control is triggered by the amount of operation on the acceleration command part (8) being increased when logical OR of a condition regarding the amount of operation on the acceleration command part (8) and a condition regarding the rate of increase in the amount of operation on the acceleration command part (8) is satisfied irrespective of how long a state of the increase in the amount of operation on the acceleration command part (8) continues under a state where the throttle valve (SV) is not in a full-open state and the piston (13) is moved to and fro by combustion of the mixed gas.

7. A method for controlling straddled vehicle according to claim 6, further comprising a throttle position sensor (80) configured to detect the degree of opening of the throttle valve (SV), wherein the method further comprises:
making determination about the rate of increase in the amount of operation on the acceleration command part (8) and the amount of operation on the acceleration command part (8) based on a result of detection performed by the throttle position sensor (80).

8. A method for controlling straddled vehicle according to claim 6 or 7, further comprising a clutch (CL) configured to switch between states of allowing and blocking transmission of a rotational force from the crankshaft (15) to the drive wheel (3b) in accordance with the rotation speed of the crankshaft (15), wherein the method further comprises:
in at least part of a time period during which the clutch (CL) blocks transmission of the rotational force, controlling the switching parts (611 to 616) so as to assist the piston (13) operation, triggered by the amount of operation on the acceleration command part (8).

9. A method for controlling straddled vehicle according to any one of claims 6 to 8, wherein the method further comprises: in a case where the rotation speed of the crankshaft (15) is equal to or less than an idling rotation speed of the single-cylinder engine (10), controlling the plurality of switching parts (611 to 616) so as to assist the piston (13) operation, triggered by the amount of operation on the acceleration command part (8).

10. A method for controlling straddled vehicle according to any one of claims 6 to 9, wherein the throttle valve is a mechanical throttle valve (SV) mechanically coupled to the acceleration command part (8) with a cable, and the method further comprises:
controlling the plurality of switching parts (611 to 616) so as to assist the piston (13) operation, triggered by the amount of operation on the acceleration command part (8), which is mechanically coupled to the mechanical throttle valve (SV).

## Patentansprüche

1. Ein Spreiz-Sitz-Fahrzeug, das umfasst:
einen Ein-Zylinder-Motor (10), der einen Kolben (13) und eine Kurbel-Welle (15) beinhaltet, der Kolben (13) ist in einem Zylinder (12) vorgesehen, und vor und zurück bewegbar durch Verbrennung von einem Gas-Gemisch, das Luft und einen Kraftstoff beinhaltet, die Kurbel-Welle (15) ist konfiguriert um drehbar zu sein zusammen mit der Vor-und-Rück-Bewegung von dem Kolben (13);
ein Antriebs-Rad (3b), das konfiguriert ist um eine Dreh-Kraft, ausgegeben von dem Ein-Zylinder-Motor (10), über die Kurbel-Welle (15) zu empfangen, und das Spreiz-Sitz-Fahrzeug anzutreiben;
einen Beschleunigungs-Befehls-Teil (8), der konfiguriert ist um das Spreiz-Sitz-Fahrzeug zu instruieren beschleunigt zu werden, in Übereinstimmung mit einer Betätigung daran;
ein Drossel-Ventil (SV), das in einem Einlass-Durchgang (Ip) angeordnet ist, der mit dem Ein-Zylinder-Motor (10) verbunden ist, und konfiguriert ist um auf einen Grad geöffnet zu werden, der auf dem Betrag von einer Betätigung von dem Beschleunigungs-Befehls-Teil (8) beruht, so dass ein Betrag von der Luft zu dem Ein-Zylinder-Motor (10) zugeführt ist, der Betrag entsprechend zu dem Grad der Öffnung;
ein Permanent-Magnet-Typ-Motor (20), der einen Rotor (30) und einen Permanent-Magnet beinhaltet, der Rotor (30) ist direkt oder indirekt mit der Kurbel-Welle (15) verbunden, so dass er in Erwiderung auf die Drehung der Kurbel-Welle (15) drehbar ist, der Permanent-Magnet ist an dem Rotor (30) vorgesehen;
eine Batterie (4);
einen Inverter (61), der eine Mehrzahl von Schalt-Teile (611 bis 616) beinhaltet, die konfiguriert sind, um einen Strom-Fluss zwischen der Batterie (4) und dem Permanent-Magnet-Typ-Motor (20) zu steuern; und
eine Steuer-Vorrichtung (60), die konfiguriert ist um die Mehrzahl von Schalt-Teile (611 bis 616) zu steuern, um so eine Kolben-Bewegung zu unterstützen, durch Richten des Permanent-Magnet-Typ-Motors (20), um eine Kraft auf den Kolben (13) über die Kurbel-Welle (16) aufzubringen, so dass die Kraft mit einer Kraft, erzeugt durch Verbrennung in dem Ein-Zylinder-Motor (10), kooperiert um den Kolben (13) auf und ab zubewegen, die Steuerung ist getriggert durch den Betrag der Betätigung an dem Beschleunigungs-Befehls-Teil (8), der erhöht ist, wenn ein logisches Oder von einer Bedingung bezüglich des Betrags von der Betätigung von dem Beschleunigungs-Befehls-Teil (8) und einer Bedingung bezüglich der Rate der Erhöhung von dem Betrag von der Betätigung von dem Beschleunigungs-Befehls-Teil (8) erfüllt ist, ungeachtet wie lang ein Zustand der Erhöhung von dem Betrag der Betätigung von dem Beschleunigungs-Befehls-Teil (8) fortbesteht in einem Zustand, in dem das Drossel-Ventil (SV) nicht in einem vollgeöffneten Zustand ist und der Kolben (13) auf und ab bewegt ist durch Verbrennung von dem Gas-Gemisch.

2. Ein Spreiz-Sitz-Fahrzeug gemäß Anspruch 1, das einen Drossel-Positions-Sensor (80) umfasst, der konfiguriert ist, um den Grad der Öffnung von dem Drossel-Ventil (SV) zu erfassen, wobei
die Steuer-Vorrichtung (60) konfiguriert ist, um eine Bestimmung zu machen zu der Rate der Erhöhung in dem Betrag der Betätigung von dem Beschleunigungs-Befehls-Teil (8) und dem Betrag der Betätigung von dem Beschleunigungs-Befehls-Teil (8) auf Grundlage eines Ergebnisses von der Erfassung, durchgeführt durch den Drossel-Positions-Sensor (80).

3. Ein Spreiz-Sitz-Fahrzeug gemäß Anspruch 1 oder 2, das weiterhin umfasst eine Kupplung (CL), die konfiguriert ist um zwischen Zuständen zu schalten, die Übertragung von einer Dreh-Kraft von der Kurbel-Welle (15) zu dem Antriebs-Rad (3b) in Übereinstimmung mit der Dreh-Geschwindigkeit von der Kurbel-Welle (15) gestatten und blockieren, wobei
zumindest ein Teil von einer Zeit-Periode, während der die Kupplung (CL) Übertragung von der Dreh-Kraft blockiert, steuert die Steuer-Vorrichtung (60) die Schalt-Teile (611 bis 616), so dass diese die Kolben-(13)-Betätigung unterstützen, getriggert durch den Betrag der Betätigung von dem Beschleunigungs-Befehls-Teil (8).

4. Ein Spreiz-Sitz-Fahrzeug gemäß zu irgendeinem der Ansprüche 1 bis 3, wobei in einem Fall, in dem die Dreh-Geschwindigkeit von der Kurbel-Welle (15) gleich oder weniger ist als eine Leerlauf-Dreh-Geschwindigkeit von dem Ein-Zylinder-Motor (10), die Steuer-Vorrichtung (60) die Mehrzahl von Schalt-Teile (611 bis 616) steuert, um so die Kolben-(13)-Betätigung zu unterstützen, getriggert durch den Betrag der Betätigung von dem Beschleunigungs-Befehls-Teil (8).

5. Ein Spreiz-Sitz-Fahrzeug gemäß zu irgendeinem der Ansprüche 1 bis 4, wobei das Drossel-Ventil ein mechanisches Drossel-Ventil (SV) ist, das mechanisch mit dem Beschleunigungs-Befehls-Teil (8) mit einem Kabel gekoppelt ist, und
die Steuer-Vorrichtung (60) ist konfiguriert, um die Mehrzahl von Schalt-Teile (611 bis 616) zu steuern, um so die Kolben-(13)-Betätigung zu unterstützen, getriggert durch den Betrag der Betätigung von der Beschleunigungs-Befehls-Teil (8), das mechanisch mit dem mechanischen Drossel-Ventil (SV) gekoppelt ist.

6. Ein Verfahren zur Steuerung eines Spreiz-Sitz-Fahrzeugs, das Spreiz-Sitz-Fahrzeug umfasst:
einen Ein-Zylinder-Motor (10), der einen Kolben (13) und eine Kurbel-Welle (15) beinhaltet, der Kolben (13) ist in einem Zylinder (12) vorgesehen, und vor und zurück bewegbar durch Verbrennung von einem Gas-Gemisch, das Luft und einen Kraftstoff beinhaltet, die Kurbel-Welle (15) ist konfiguriert um drehbar zu sein zusammen mit der Vor-und-Rück-Bewegung von dem Kolben (13);
ein Antriebs-Rad (3b), das konfiguriert ist um eine Dreh-Kraft, ausgegeben von dem Ein-Zylinder-Motor (10), über die Kurbel-Welle (15) zu empfangen, und das Spreiz-Sitz-Fahrzeug anzutreiben;
einen Beschleunigungs-Befehls-Teil (8), der konfiguriert ist um das Spreiz-Sitz-Fahrzeug zu instruieren beschleunigt zu werden, in Übereinstimmung mit einer Betätigung daran;
ein Drossel-Ventil (SV), das in einem Einlass-Durchgang (Ip) angeordnet ist, der mit dem Ein-Zylinder-Motor (10) verbunden ist, und konfiguriert ist um auf einen Grad geöffnet zu werden, der auf dem Betrag von einer Betätigung von dem Beschleunigungs-Befehls-Teil (8) beruht, so dass ein Betrag von der Luft zu dem Ein-Zylinder-Motor (10) zugeführt ist, der Betrag entsprechend zu dem Grad der Öffnung;
ein Permanent-Magnet-Typ-Motor (20), der einen Rotor (30) und einen Permanent-Magnet beinhaltet, der Rotor (30) ist direkt oder indirekt mit der Kurbel-Welle (15) verbunden, so dass er in Erwiderung auf die Drehung der Kurbel-Welle (15) drehbar ist, der Permanent-Magnet ist an dem Rotor (30) vorgesehen;
eine Batterie (4);
einen Inverter (61), der eine Mehrzahl von Schalt-Teile (611 bis 616) beinhaltet, die konfiguriert sind, um einen Strom-Fluss zwischen der Batterie (4) und dem Permanent-Magnet-Typ-Motor (20) zu steuern; das Verfahren umfasst:
Steuern der Mehrzahl von Schalt-Teile (611 bis 616), um so eine Kolben-Bewegung zu unterstützen, durch Richten des Permanent-Magnet-Typ-Motors (20), um eine Kraft auf den Kolben (13) über die Kurbel-Welle (16) aufzubringen, so dass die Kraft mit einer Kraft, erzeugt durch Verbrennung in dem Ein-Zylinder-Motor (10), kooperiert um den Kolben (13) auf und ab zubewegen, die Steuerung ist getriggert durch den Betrag der Betätigung an dem Beschleunigungs-Befehls-Teil (8), der erhöht ist, wenn ein logisches Oder von einer Bedingung bezüglich des Betrags von der Betätigung von dem Beschleunigungs-Befehls-Teil (8) und einer Bedingung bezüglich der Rate der Erhöhung von dem Betrag von der Betätigung von dem Beschleunigungs-Befehls-Teil (8) erfüllt ist, ungeachtet wie lang ein Zustand der Erhöhung von dem Betrag der Betätigung von dem Beschleunigungs-Befehls-Teil (8) fortbesteht in einem Zustand, in dem das Drossel-Ventil (SV) nicht in einem vollgeöffneten Zustand ist und der Kolben (13) auf und ab bewegt ist durch Verbrennung von dem Gas-Gemisch.

7. Ein Verfahren zur Steuerung eines Spreiz-Sitz-Fahrzeugs gemäß Anspruch 6, das weiter unfasst einen Drossel-Positions-Sensor (80), der konfiguriert ist, um den Grad der Öffnung von dem Drossel-Ventil (SV) zu erfassen, wobei das Verfahren weiter umfasst:
Machen einer Bestimmung zu der Rate der Erhöhung in dem Betrag der Betätigung von dem Beschleunigungs-Befehls-Teil (8) und dem Betrag der Betätigung von dem Beschleunigungs-Befehls-Teil (8) auf Grundlage eines Ergebnisses von der Erfassung, durchgeführt durch den Drossel-Positions-Sensor (80).

8. Ein Verfahren zur Steuerung eines Spreiz-Sitz-Fahrzeugs gemäß Anspruch 6 oder 7, das weiterhin umfasst eine Kupplung (CL), die konfiguriert ist um zwischen Zuständen zu schalten, die Übertragung von einer Dreh-Kraft von der Kurbel-Welle (15) zu dem Antriebs-Rad (3b) in Übereinstimmung mit der Dreh-Geschwindigkeit von der Kurbel-Welle (15) gestatten und blockieren, wobei das Verfahren weiter umfasst: in zumindest einem Teil von einer Zeit-Periode, während der die Kupplung (CL) Übertragung von der Dreh-Kraft blockiert, Steuern der Schalt-Teile (611 bis 616), so dass diese die Kolben-(13)-Betätigung unterstützen, getriggert durch den Betrag der Betätigung von dem Beschleunigungs-Befehls-Teil (8).

9. Ein Verfahren zur Steuerung eines Spreiz-Sitz-Fahrzeugs gemäß zu irgendeinem der Ansprüche 6 bis 8, wobei in einem Fall, in dem die Dreh-Geschwindigkeit von der Kurbel-Welle (15) gleich oder weniger ist als eine Leerlauf-Dreh-Geschwindigkeit von dem Ein-Zylinder-Motor (10), Steuern der Mehrzahl von Schalt-Teile (611 bis 616), um so die Kolben-(13)-Betätigung zu unterstützen, getriggert durch den Betrag der Betätigung von dem Beschleunigungs-Befehls-Teil (8).

10. Ein Verfahren zur Steuerung eines Spreiz-Sitz-Fahrzeugs gemäß zu irgendeinem der Ansprüche 6 bis 9, wobei das Drossel-Ventil ein mechanisches Drossel-Ventil (SV) ist, das mechanisch mit dem Beschleunigungs-Befehls-Teil (8) mit einem Kabel gekoppelt ist, und das Verfahren weiter umfasst:
Steuern der Mehrzahl von Schalt-Teile (611 bis 616), um so die Kolben-(13)-Betätigung zu unterstützen, getriggert durch den Betrag der Betätigung von der Beschleunigungs-Befehls-Teil (8), das mechanisch mit dem mechanischen Drossel-Ventil (SV) gekoppelt ist.

## Revendications

1. Véhicule à enfourcher comprenant :
un moteur monocylindre (10) comprenant un piston (13) et un vilebrequin (15), le piston (13) est disposé dans un cylindre (12) et peut être déplacé en va-et-vient par la combustion d'un mélange de gaz contenant de l'air et un carburant, le vilebrequin (15) est configuré pour être mis en rotation avec le mouvement de va-et-vient du piston (13);
une roue motrice (3b) configurée pour recevoir une force de rotation émise en sortie par le moteur monocylindre (10) via le vilebrequin (15) et pour entraîner le véhicule à enfourcher ;
une partie de commande d'accélération (8) configurée pour ordonner que le véhicule à enfourcher soit accéléré conformément à un actionnement de celle-ci ;
un papillon des gaz (SV) disposé dans un passage d'admission (Ip) relié au moteur monocylindre (10), et configuré pour être ouvert selon un degré qui est basé sur le degré d'actionnement de la partie de commande d'accélération (8) de sorte qu'une quantité d'air est fournie au moteur monocylindre (10), la quantité correspondant au degré d'ouverture ;
un moteur de type à aimant permanent (20) comprenant un rotor (30) et un aimant permanent, le rotor (30) est relié directement ou indirectement au vilebrequin (15) de manière à pouvoir tourner en réponse à la rotation du vilebrequin (15), l'aimant permanent fourni au rotor (30) ;
une batterie (4) ;
un onduleur (61) comprenant une pluralité de parties de commutation (611 à 616) configurées pour commander un courant circulant entre la batterie (4) et le moteur de type à aimant permanent (20) ; et
un dispositif de commande (60) configuré pour commander la pluralité de parties de commutation (611 à 616) de manière à assister le fonctionnement d'un piston en contrôlant le moteur de type à aimant permanent (20) de manière à appliquer une force au piston (13) via le vilebrequin (15) de telle sorte que la force coopère avec une force générée par la combustion dans le moteur monocylindre (10) pour déplacer le piston (13) en va-et-vient, la commande est déclenchée par l'augmentation du degré d'actionnement de la partie de commande d'accélération (8) lorsque la condition logique OU entre une condition concernant le degré d'actionnement de la partie de commande d'accélération (8) et une condition concernant le taux d'augmentation du degré d'actionnement de la partie de commande d'accélération (8) est satisfaite, indépendamment de la durée pendant laquelle un état d'augmentation du degré d'actionnement de la partie de commande d'accélération (3) se poursuit dans un état où le papillon des gaz (SV) n'est pas dans un état de pleine ouverture et le piston (13) est déplacé en va-et-vient par la combustion du mélange de gaz.

2. Véhicule à enfourcher selon la revendication 1, comprenant un capteur de position du papillon des gaz (80) configuré pour détecter le degré d'ouverture du papillon des gaz (SV), où le dispositif de commande (60) est configuré pour déterminer le taux d'augmentation du degré d'actionnement de la partie de commande d'accélération (8) et le degré d'actionnement de la partie de commande d'accélération (8) en se fondant sur un résultat d'une détection effectuée par le capteur de position du papillon des gaz (80).

3. Véhicule à enfourcher selon la revendication 1 ou 2, comprenant en outre un embrayage (CL) configuré pour commuter entre des états d'autorisation et de blocage de la transmission d'une force de rotation du vilebrequin (15) à la roue motrice (3b) en fonction de la vitesse de rotation du vilebrequin (15), où
dans au moins une partie d'une période de temps pendant laquelle l'embrayage (CL) bloque la transmission de la force de rotation, le dispositif de commande (60) commande les parties de commutation (611 à 616) de manière à assister le fonctionnement du piston (13), déclenché par le degré d'actionnement de la pièce de commande d'accélération (8).

4. Véhicule à enfourcher selon l'une quelconque des revendications 1 à 3, où, dans un cas où la vitesse de rotation du vilebrequin (15) est égale ou inférieure à une vitesse de rotation au ralenti du moteur monocylindre (10), le dispositif de commande (60), déclenché par le degré d'actionnement de la pièce de commande d'accélération (8), commande la pluralité de parties de commutation (611 à 616) de manière à assister le fonctionnement du piston (13).

5. Véhicule à enfourcher selon l'une quelconque des revendications 1 à 4, où le papillon des gaz est un papillon mécanique (SV) couplé mécaniquement à la partie de commande d'accélération (8) par un câble, et
le dispositif de commande (60), déclenché par le degré d'actionnement de la partie de commande d'accélération (8) qui est couplée mécaniquement au papillon mécanique (SV), est configuré pour commander la pluralité de parties de commutation (611 à 616) de manière à assister le fonctionnement du piston (13).

6. Procédé pour commander un véhicule à enfourcher, le véhicule à enfourcher comprenant :
un moteur monocylindre (10) comprenant un piston (13) et un vilebrequin (15), le piston (13) est disposé dans un cylindre (12) et peut être déplacé en va-et-vient par la combustion d'un mélange de gaz contenant de l'air et un carburant, le vilebrequin (15) est configuré pour être mis en rotation avec le mouvement de va-et-vient du piston (13) ;
une roue motrice (3b) configurée pour recevoir une force de rotation émise en sortie par le moteur monocylindre (10) via le vilebrequin (15) et pour entraîner le véhicule à enfourcher ;
une partie de commande d'accélération (8) configurée pour ordonner que le véhicule à enfourcher soit accéléré conformément à un actionnement de celle-ci ;
un papillon des gaz (SV) disposé dans un passage d'admission (Ip) relié au moteur monocylindre (10), et configuré pour être ouvert selon un degré qui est basé sur le degré d'actionnement de la partie de commande d'accélération (8) de sorte qu'une quantité d'air est fournie au moteur monocylindre (10), la quantité correspondant au degré d'ouverture ;
un moteur de type à aimant permanent (20) comprenant un rotor (30) et un aimant permanent, le rotor (30) est relié directement ou indirectement au vilebrequin (15) de manière à pouvoir tourner en réponse à la rotation du vilebrequin (15), l'aimant permanent fourni au rotor (30) ;
une batterie (4) ;
un onduleur (61) comprenant une pluralité de parties de commutation (611 à 616) configurées pour commander un courant circulant entre la batterie (4) et le moteur de type à aimant permanent (20) ; le procédé comprenant :
la commande de la pluralité de parties de commutation (611 à 616) de manière à assister le fonctionnement d'un piston en contrôlant le moteur de type à aimant permanent (20) de manière à appliquer une force au piston (13) via le vilebrequin (15) de telle sorte que la force coopère avec une force générée par la combustion dans le moteur monocylindre (10) pour déplacer le piston (13) en va-et-vient, la commande est déclenchée par l'augmentation du degré d'actionnement de la partie de commande d'accélération (8) lorsque la condition logique OU entre une condition concernant le degré d'actionnement de la partie de commande d'accélération (8) et une condition concernant le taux d'augmentation du degré d'actionnement de la partie de commande d'accélération (8) est satisfaite, indépendamment de la durée pendant laquelle un état d'augmentation du degré d'actionnement de la partie de commande d'accélération (3) se poursuit dans un état où le papillon des gaz (SV) n'est pas dans un état de pleine ouverture et le piston (13) est déplacé en va-et-vient par la combustion du mélange de gaz.

7. Procédé pour commander un véhicule à enfourcher selon la revendication 6, comprenant en outre un capteur de position du papillon des gaz (80) configuré pour détecter le degré d'ouverture du papillon des gaz (SV), où le procédé comporte en outre :
la détermination du taux d'augmentation du degré d'actionnement de la partie de commande d'accélération (8) et du degré d'actionnement de la partie de commande d'accélération (8) en se fondant sur un résultat d'une détection effectuée par le capteur de position du papillon des gaz (80).

8. Procédé pour commander un véhicule à enfourcher selon la revendication 6 ou 7, comprenant en outre un embrayage (CL) configuré pour commuter entre des états d'autorisation et de blocage de la transmission d'une force de rotation du vilebrequin (15) à la roue motrice (3b) en fonction de la vitesse de rotation du vilebrequin (15), où le procédé comporte en outre :
dans au moins une partie d'une période de temps pendant laquelle l'embrayage (CL) bloque la transmission de la force de rotation, la commande des parties de commutation (611 à 616) de manière à assister le fonctionnement du piston (13), déclenché par le degré d'actionnement de la pièce de commande d'accélération (8).

9. Procédé pour commander un véhicule à enfourcher selon l'une quelconque des revendications 6 à 8, où le procédé comporte en outre : dans un cas où la vitesse de rotation du vilebrequin (15) est égale ou inférieure à une vitesse de rotation au ralenti du moteur monocylindre (10), la commande, déclenchée par le degré d'actionnement de la pièce de commande d'accélération (8), de la pluralité de parties de commutation (611 à 616) de manière à assister le fonctionnement du piston (13).

10. Procédé pour commander un véhicule à enfourcher selon l'une quelconque des revendications 6 à 9, où le papillon des gaz est un papillon mécanique (SV) couplé mécaniquement à la partie de commande d'accélération (8) par un câble, et le procédé comporte en outre :
la commande, déclenchée par le degré d'actionnement de la partie de commande d'accélération (8) qui est couplée mécaniquement au papillon mécanique (SV), de la pluralité de parties de commutation (611 à 616) de manière à assister le fonctionnement du piston (13).
